(19) Europäisches Patentamt
European Patent Office
Office européen des brevets

(11) Veröffentlichungsnummer: **0 302 345 B1**

(12) **EUROPÄISCHE PATENTSCHRIFT**

(45) Veröffentlichungstag der Patentschrift: **24.06.92**

(51) Int. Cl.[5]: **C22B 3/00**

(21) Anmeldenummer: **88111948.1**

(22) Anmeldetag: **25.07.88**

# (54) Verfahren zur gemeinsamen Abtrennung von Störelementen aus Wertmetall-Elektrolytlösungen.

(30) Priorität: **01.08.87 DE 3725611**

(43) Veröffentlichungstag der Anmeldung:
**08.02.89 Patentblatt 89/06**

(45) Bekanntmachung des Hinweises auf die Patenterteilung:
**24.06.92 Patentblatt 92/26**

(84) Benannte Vertragsstaaten:
**AT BE DE ES FR GB IT NL SE**

(56) Entgegenhaltungen:

**EP-A- 0 106 118**
**EP-A- 0 164 174**
**DE-A- 2 210 106**
**DE-A- 2 603 874**
**DE-A- 2 614 341**
**DE-A- 2 615 638**
**DE-A- 3 423 713**
**GB-A- 1 060 462**
**US-A- 3 464 784**
**US-A- 3 821 351**
**US-A- 3 936 494**
**US-A- 4 108 958**
**US-A- 4 115 512**
**US-A- 4 166 837**
**US-A- 4 194 905**

**CHEMICAL ABSTRACTS, Band 71, 1969, Seite 187, Zusammenfassung Nr. 41354c, Columbus, Ohio, US;**

**JOURNAL CHEMICAL RESEARCH, 1982, Seiten 90-91; F. VERNON et al.: "Solvent extraction of metals by versatohydroxamic acid"**

**REPRINTS OF THE ISEC '86, 11.-16. September 1986, Seiten 355-362, München, DE; M. CASARCI et al.: "Separation of long alpha emitters from medium activity liquid wastes by solvent extraction with tri butyl aceto hydroxamic acid (TBAH)"**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Kehl, Ralf**
**Bockumerstrasse 192**
**W-4000 Düsseldorf 31(DE)**
Erfinder: **Schwab, Werner, Dr.**
**Bachstrasse 76**
**W-4018 Langenfeld(DE)**
Erfinder: **Sudderth, Robert Brantley**
**6715 Calle Padre Felipe**
**Tucson Arizona 85718(US)**
Erfinder: **Kordosky, Gary Alan**
**5345 West Camino Del Dieserto**
**Tucson Arizona 85705(US)**

**EP 0 302 345 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur gemeinsamen Abtrennung von Arsen, Antimon, Wismut und Eisen nebeneinander aus Wertmetall-Elektrolytlösungen durch Extraktion aus flüssiger Phase und nachfolgende Gewinnung der genannten Störelemente zur Wiederverwertung.

Unter "Wertmetallen" werden hier wie in der nachfolgenden Beschreibung und in den Patentansprüchen diejenigen metallischen Elemente verstanden, die aus ihren natürlichen Quellen, insbesondere aus ihren Erzen, im Wege industrieller Verfahren gewonnen werden und in metallischer Form, gegebenenfalls in Legierung mit anderen Metallen, Verwendung finden. In der Gewinnung der Wertmetalle spielen neben pyrometallurgischen auch hydrometallurgische Verfahren eine große Rolle. Häufig werden die in den Erzen enthaltenen Metalle oder Metallsalze mit wäßrigen Systemen aufgeschlossen oder ausgelaugt und aus derartigen Metallsalzlösungen das Wertmetall durch Elektrolyse gewonnen. Die Elektrolyse derartiger wäßriger Lösungen wird jedoch in ihrer Effizienz dadurch stark beeinträchtigt, daß die meisten Wertmetalle in Erzen mit anderen Metallen "vergesellschaftet" sind. Die Elektrolytlösungen zur Wertmetallgewinnung enthalten daher fast immer mehr oder weniger große Mengen an Störelementen, die die elektrolytische Gewinnung des Wertmetalls beeinträchtigen, oder als störende Verunreinigungen zusammen mit dem Wertmetall abgeschieden werden. Um die Reinheit der elektrolytisch abgeschiedenen Wertmetalle zu erhöhen, ist deswegen eine Abtrennung möglichst aller Störelemente aus Wertmetall-Elektrolytlösungen erwünscht.

Beispielsweise ist die Gewinnung der Metalle Kupfer, Zink, Kobalt oder Nickel auf elektrolytischem Wege möglich. Wäßrige Lösungen aus der Laugung von Erzen, die diese Metalle enthalten, enthalten jedoch üblicherweise mehr oder weniger große Mengen an Störelementen. Befriedigende Verfahren zur Abtrennung und gegebenenfalls auch Wiedergewinnung derartiger Störelemente werden nicht nur deswegen angestrebt, weil sich damit die Qualität und Quantität der abgeschiedenen Wertmetalle verbessern läßt, sondern auch deswegen, weil die Gewinnung und das Recycling der Störelemente ökonomisch und ökologisch sinnvoll ist.

Die Gewinnung von Reinstkupfer im Wege pyrometallurgischer Raffination ist beispielsweise durch zwei getrennt voneinander ablaufende Verfahrensschritte gekennzeichnet. Im ersten Schritt, der schmelzmetallurgischen Raffination, wird aus der Verhüttung von Kupfererzen stammendes, relativ unreines Rohkupfer aus der Schmelze abgeschieden ("Anodenofen"). In der nachfolgenden Raffinationselektrolyse werden Störelemente abgetrennt und teilweise im Anodenschlamm abgeschieden, während hoch leitfähiges sogenanntes "Elektrolyt-Kupfer" (bis 99,99 % Cu) an der Kathode abgeschieden wird. Die so hergestellten. Kathodenblöcke aus Reinstkupfer können anschließend im Wege einer plastischen Verformung (Walzen, Ziehen, Pressen u.a.) weiterverarbeitet werden.

Unter den zahlreichen Störfaktoren der Kupfer-Raffinationselektrolyse fallen vor allem während des Verfahrensablaufs ansteigende Mengen an Arsen, Antimon, Bismut und Eisen in den Elektrolytlösungen ins Gewicht. Die genannten Störelemente reichern sich insbesondere dann zunehmend schnell in den stark schwefelsauren Elektrolyselösungen an, wenn - wie es in steigendem Umfang geschieht - an derartigen Störelementen reichere Roherze verhüttet und in den nachfolgenden Raffinationsverfahren verarbeitet werden. In der Folge muß auch mit größeren Konzentrationen der Störelemente Arsen, Antimon, Bismut und Eisen in den Kupfer-Raffinations-Elektrolytlösungen gerechnet werden. Eine Anreicherung der Störelemente verschlechtert nicht nur die Qualität des kathodisch abgeschiedenen Kupfers, das zunehmende Mengen an Arsen-, Antimon- und Bismut-Verunreinigungen enthält, sondern vermindert auch (durch den Potentialsprung $Fe^{2+} \rightarrow Fe^{3+}$) die Stromausbeute und erhöht dadurch die Energiekosten des Verfahrens.

Aus dem Stand der Technik sind zahlreiche Verfahren bekannt, in denen Arsen, in wenigen Fällen auch Antimon, aus den Abscheidungslösungen beseitigt werden können. Gemeinsam ist allen diesen Verfahren, daß bei Erreichen kritischer Konzentrationen der Störelemente in den Elektrolytlösungen, insbesondere bei Erreichen eines Grenzwertes von 10 g/l Arsen, ein Teilstrom der Elektrolytlösung aus den Raffinationsbehältern abgezogen und danach einer sogenannten "Kupfer-Gewinnungs-Elektrolyse" unterzogen wird. Dabei wird nicht nur das restliche Kupfer aus den Lösungen elektrolytisch abgeschieden, sondern (in einer letzten Stufe, "Liberatorzellen") auch die oben genannten Störelemente entfernt. Das hierdurch erhaltene, relativ unreine Kupfer muß vor Weiterverwendung nochmals umgeschmolzen und dadurch auf die gewünschte Reinheit gebracht werden. Nach der Abscheidung der genannten Elemente verbleiben in der stark schwefelsauren Lösung nur noch relativ hohe Nickelmengen, die nach Eindampfen als Nickelrohsulfat abgeschieden und zur Entfernung von Eisen-, Arsen-, und gegebenenfalls auch Antimon-Verunreinigungen einer weiteren Reinigung unterworfen werden. Die resultierende konzentrierte Abfall-Schwefelsäure wird größtenteils in das Verfahren recyclisiert.

Zur Abtrennung von Arsen aus den Kupfer-Raffinationselektrolyten wird in der DE-OS 26 03 874 ein

Verfahren beschrieben, in dem man die wäßrige Elektrolytlösung mit einer Tributylphosphat enthaltenden organischen Phase in Kontakt bringt und dadurch das in der Lösung enthaltene Arsen in die organische Phase extrahiert. In einem Verfahren gemäß der US-PS 4 115 512 wird ebenfalls eine organische, Tributylphosphat in Abmischung mit quartären Ammoniumverbindungen enthaltende Lösung als Extraktand verwendet. Tributylphosphat sowie organische Ester der Phosphonsäure, phosphonigen Säure, Phosphinsäure und phosphinigen Säure werden in Verfahren gemäß den DE-OSen 26 14 341 und 26 15 638 zusammen mit organischen Lösungsmitteln als Extraktanden eingesetzt, um Arsen oder Antimon aus Kupfer-Elektrolytlösungen abzutrennen. Ebenfalls mit phosphororganischen Verbindungen, beispielsweise mit Trioctylphosphinoxid (TOPO), in organischen Lösungsmitteln wie Kerosin, wird Arsen in einem Verfahren gemäß der EP-A-0 106 118 aus Elektrolyten der Kupferraffination abgetrennt.

In der DE-OS 34 23 713 wird ein weiteres Verfahren zum Entfernen von Arsen aus schwefelsauren Kupfer-Elektrolyten offenbart, in dem als Extraktanden aliphatische Alkohole mit 6 bis 13 C-Atomen, bevorzugt 2-Ethyl-1-hexanol, in organischer Phase verwendet werden. Ein Großteil, wenn auch nicht das gesamte Arsen, läßt sich im Verlauf von sechs Extraktionszyklen aus der Elektrolytlösung entfernen.

Alle genannten Verfahren weisen jedoch folgende Nachteile auf: Um eine effiziente Extraktion der Störelemente aus den Elektrolytlösungen zu erreichen, müssen die Reagenzien in konzentrierter Form eingesetzt werden. Dies geht expressis verbis beispielsweise aus der DE-OS 26 15 638 (Anspruch 4 in Verbindung mit Seite 4, vorletzter Absatz, der Beschreibung) hervor. Zudem erfordern die meisten Verfahren eine hohe Konzentration an Säure in den Extraktionslösungen, die praktisch dadurch erreicht wird, daß durch Einengen die $H_2SO_4$-Konzentration im Elektrolyten von 100 bis 250 g/l auf ca. 500 g/l erhöht wird. Bei derart hohen Schwefelsäurekonzentrationen extrahieren die phosphororganischen Verbindungen nicht nur die Störelemente aus den Lösungen, sondern es werden auch erhebliche Mengen an Schwefelsäure in die organische Phase überführt. Dies erfordert den Einbau mehrerer Waschstufen, in denen die extrahierte Schwefelsäure zurückgewonnen und in das Verfahren recyclisiert werden muß. Zudem sind die phosphororganischen Extraktanden (insbesondere TBP) bei derart hohen Säurestärken nicht hinreichend stabil und damit in ihrer Wirksamkeit beeinträchtigt. Ergänzend muß in allen genannten Verfahren zur Verbesserung der Trennung der organischen von der anorganischen Phase ein sogenannter Modifier, meist Insodecanol, zum Extraktionsmittel zugesetzt werden, der unter Umständen die Zersetzung des Extraktanden noch beschleunigen kann.

Zudem weisen alle Verfahren Nachteile bei der sich an den eigentlichen Extraktionsvorgang anschließenden Reextration der Störelemente aus der organischen Phase auf. So wird gemäß den DE-OSen 26 14 341 und 26 15 638 das Arsen mit wäßrigen Alkalilösungen aus der organischen Phase abgetrennt. Dabei wird Arsen jedoch in den Oxidationsstufen (III) und (V) erhalten. Um $As_2O_3$ wie gewünscht als Endprodukt gewinnen zu können, muß das fünfwertige Arsen vor oder während der Reextraktion noch zusätzlich reduziert werden, üblicherweise unter Einsatz von $SO_2$. Dies erfordert einen weiteren Verfahrensschritt mit zusätzlichen Anlagen und Chemikalien. Entsprechend der EP-A-0 106 118 werden Salzsäure und andere wäßrige Mineralsäuren zur Reextraktion des Arsens verwendet. Nur durch strenge Kontrolle des Chloridgehaltes bei der Reextraktion läßt sich verhindern, daß $Cl^-$ in den Raffinationselektrolyten gelangt und dies die Kupferraffination in unerwünschter Form beeinträchtigt. Dazu sind in der Praxis aufwendige, mehrstufige Kreislaufsysteme erforderlich.

Die am Beispiel der Abtrennung von Störelementen aus Kupfer-Elektrolytlösungen aufgezeigten Schwierigkeiten gelten entsprechend auch für Verunreinigungen durch Störelemente in wäßrigen Elektrolytlösungen anderer Wertmetalle, wie z.B. Zink oder Nickel. Im Einzelfall kann die Abtrennung eines bestimmten Störelements oder einer Gruppe derartiger Elemente im Vordergrund stehen.

Es bestand in Anbetracht des beschriebenen Standes der Tecknik ein nachhaltiger Bedarf für ein Verfahren zur gemeinsamen Abtrennung von Störelementen aus Wertmetall-Elektrolytlösungen und die nachfolgende Gewinnung der Störelemente zur Weiterverwertung, das die Abtrennung der vier Störelemente Arsen (As), Antimon (Sb), Bismut (Bi) und Eisen (Fe) ermöglicht und sich dazu einfacher, leicht und preiswert zugänglicher Extraktanden bedient. Diese sollten zudem unter den in den Wertmetall-Elektrolytlösungen herrschenden stark sauren Bedingungen und den üblichen Verfahrenstemperaturen stabil sein. Aufgrund der oben beschriebenen Probleme und Nachteile bei aus dem Stand der Technik bekannten Verfahren zur Arsenabtrennung aus Kupferraffinations-Elektrolytlösungen wurde in diesem Bereich schon lange nach Lösungen gesucht. Ein solches Verfahren zur Verfügung zu stellen, ist Aufgabe der vorliegenden Erfindung.

Eine weitere Aufgabe ist es, mit Hilfe einfacher weiterer Verfahrensschritte aus der organischen Extraktphase die genannten Störelemente zu entfernen bzw. wiederzugewinnen und dabei eine von Störelementen freie schwefelsaure Lösung zu erhalten, die problemlos dem Raffinationselektrolyten wieder zugeführt werden kann. Dabei sollte sichergestellt werden, daS der Elektrolyt nicht durch mit eingeschleppte Verunreinigungen aus dem vorangehenden Extraktions- bzw. Reextraktionsschritt verunreinigt und dadurch in seiner Wirksamkeit beeinträchtigt wird.

Verfahren zur selektiven Extraktion von Metallionen aus wäßrigen Lösungen mit Hilfe einer in einem organischen Lösungsmittel gelösten Hydroxamsäure sind aus dem Stand der Technik bekannt. In der DE-PS 22 10 106 werden mit einer Hydroxamsäure der allgemeinen Formel (A)

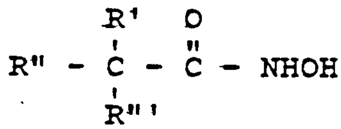

(A)

in der die Reste R für Alkylreste stehen, Übergangsmetalle aus zum Teil radioaktiven wäßrigen Lösungen von Aufarbeitungsanlagen extrahiert. Gemäß der US-PS 3 464 784 wird aus wäßrigen, vierwertiges Vanadium enthaltenden Lösungen das Vanadium mit Hilfe organo-löslicher Hyroxamsäuren der allgemeinen Formel (B) extrahiert

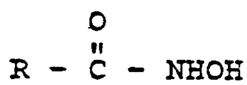

(B)

in der R für Alkyl-, Cycloalkyl- oder Arylreste mit 7 bis 44 C-Atomen, bevorzugt für sogenannte "neo-Alkylreste" stehen kann, die ein zur Carbonylgruppe benachbartes quartäres C-Atom enthalten. In "J. Chem. Research" (S) 1982. 90 ff wird außerdem die Solvent-Extraktion von Übergangsmetallen mit sogenannten Versato-Hydroxansäuren der allgemeinen Formel (B) beschrieben, in der die Reste R verzweigte, 10 bis 15 C-Atome enthaltende Alkylreste sind. Die Solvent Extraktion verschiedener Metall-Isotope aus wäßrigen Lösungen von Aufarbeitungsanlagen radioaktiver Rückstände mit Trialkylacethydroxamsäure wird in "Reprints of the ISEC '86, 11.-16.09.1986, Munich, S. 355-362" beschrieben. Eine gemeinsame Abtrennung von Arsen, Antimon, Bismut und Eisen aus Kupfer-Elektrolytlösungen wird jedoch in keiner der genannten Literaturstellen angesprochen oder nahegelegt.

Die Erfindung betrifft ein Verfahren zur gemeinsamen Abtrennung von Arsen, Antimon, Bismut und Eisen nebeneinander aus Wertmetall-Elektrolytlösungen im Wege der Solvent-Extration und nachfolgenden Wiedergewinnung der genannten Störelemente, das dadurch gekennzeichnet ist, daß man wäßrige, mineralsaure Wertmetall-Elektrolytlösungenmit einem wenig wasserlöslichen, eine oder mehrere Hydroxamsäuren der allgemeinen Formel (I)

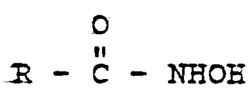

(I)

in der R für einen geradkettigen oder verzweigten, gesättigten oder ungesättigten Alkylrest mit 6 bis 22 C-Atomen, Cycloalkylrest oder Arylrest mit bis zu 19 C-Atomen steht, enthaltenden organischen Lösungsmittel versetzt, die wäßrige und organische Phase über eine ausreichende Kontaktierungszeit intensiv miteinander mischt, nach Phasentrennung die organische Phase abtrennt, diese mit einem Sulfidierungsmittel versetzt, die Sulfidfällungen des Arsens, Antimons und Bismuts auf an sich bekannten Wegen von der Organophase abtrennt, diese anschließend gegebenenfalls mit einem wasserlöslichen Komplexbildner für Eisen oder einer wäßrigen Lösung eines solchen Komplexbildners versetzt, den gebildeten Eisenkomplex mit Wasser reextrahiert und die verbleibende Organophase auf an sich bekannten Wegen aufarbeitet und/oder nachschärft und recyclisiert.

Das erfindungsgemäße Verfahren fällt unter den Oberbegriff der sogenannten "Solvent-Extraktionen". Darunter werden üblicherweise solche Verfahren verstanden, in denen zwei flüssige, mehr oder weniger nicht miteinander mischbare oder nicht ineinander lösliche Phasen miteinander in innigen Kontakt gebracht werden und dabei ein Übergang einer oder mehrerer Komponenten der einen in die andere Phase stattfindet. Üblicherweise stellt sich dabei ein von verschiedenen äußeren Parametern abhängiges Gleichgewicht ein. Derartige Parameter werden für die einzelnen Verfahrensschritte nachfolgend beschrieben.

Unter "Störelementen" werden nachfolgend in der Beschreibung sowie auch in den Patentansprüchen

die Elemente Arsen, Antimon, Bismut und Eisen verstanden, die - in Abhängigkeit von den eingesetzten Rohstoffen und den angewendeten Verhüttungsverfahren - in mehr oder weniger großen, aber auf jeden Fall störenden Konzentrationen in den Elektrolyse-Lösungen, die erfindungsgemäß von den genannten Elementen befreit werden können, insbesondere in den Elektrolyse-Lösungen der Kupfer-Raffinationselektrolyse, gelöst sind. Dabei kann es sich um eines oder mehrere der genannten Elemente in unterschiedlichen Oxidationsstufen handeln. So kann beispielsweise das Störelement Arsen in der Oxidationsstufe (III) oder der Oxidationsstufe (V) in derartigen wäßrigen Lösungen vorliegen.

Bevorzugt werden erfindungsgemäß die oben genannten Störelemente aus wäßrigen Lösungen abgetrennt, die aus Verfahren der Kupfer-Raffinationselektrolyse stammen. Das erfindungsgemäße Verfahren ist jedoch nicht auf die Abtrennung der Störelemente aus solchen Lösungen beschränkt. Es ist auch möglich, eines oder mehrere der genannten Störelemente oder alle vier aus wäßrigen, Kupfer, Zink, Nickel oder andere Wertmetalle enthaltenden Lösungen abzutrennen, die aus anderen Quellen stammen bzw. in anderen Verfahren anfallen.

Der erste Schritt des erfindungsgemäßen Verfahrens besteht darin, wäßrige, mineralsaure Wertmetall-Elektrolytlösungen mit einem wenig wasserlöslichen organischen Lösungsmittel oder Extraktionsmittel zu versetzen, das eine oder mehrere Hydroxamsäuren der allgemeinen Formel (I) enthält,

$$R - \overset{\overset{\displaystyle O}{\|}}{C} - NHOH \qquad\qquad (I)$$

in der R für einen geradkettigen oder verzweigten, gesättigten oder ungesättigten Alkylrest mit 6 bis 22 C-Atomen oder einen Cycloalkylrest oder Arylrest mit bis zu 19 C-Atomen steht. Als organische Lösungsmittel oder Extraktionsmittel, die wenig mit Wasser mischbar oder darin löslich sind, kommen folgende Verbindungen in Frage: aliphatische, cycloaliphatische oder aromatische Kohlenwasserstoffe oder deren Mischungen mit hohem Siedepunkt, chlorierte Kohlenwasserstoffe oder Ether mit hohem Siedepunkt oder auch Mischungen derartiger Verbindungen. Bevorzugt werden, wie aus dem Stand der Technik bekannt, als wenig wasserlösliche oder wenig mit Wasser mischbare organische Lösungsmittel Kerosine oder deren Mischungen verwendet.

Der hydrophobe Charakter der organischen Lösungsmittel bzw. Extraktionsmittel bestimmt auch in weitem Umfang die Natur des in diesem Lösungsmittel bzw. Extraktionsmittel enthaltenen Extraktanden. Als solcher fungiert eine Hydroxamsäure der allgemeinen Formel (I) oder eine Mischung mehrerer derartiger Hydroxamsäuren der allgemeinen Formel (I). Der Rest R in der oben genannten allgemeinen Formel kann für geradkettige Alkylreste aus der Gruppe Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Eicosyl, Uneicosyl oder Docosyl stehen. Es ist jedoch auch möglich, daß R in der oben genannten allgemeinen Formel (I) für die verzweigtkettigen Isomere der genannten geradkettigen Alkylreste steht. Entsprechend können anstelle der gesättigten Alkylreste auch ungesättigte Alkylreste stehen, die ebenfalls geradkettig oder verzweigt sein können.

Bevorzugt werden als Extraktanden Hydroxamsäuren der allgemeinen Formel (I) verwendet, in der R für verzweigte, gesättigte Alkylreste mit 6 bis 22 C-Atomen, bevorzugt für verzweigte, gesättigte Alkylreste mit 7 bis 19 C-Atomen steht.

Aufgrund der oben angesprochenen Forderung, daß sich der bzw. die als Extraktand(en) eingesetzte(n) Hydroxamsäure(n) möglichst gut in dem organischen Lösungsmittel bzw. Extraktionsmittel lösen muß und in diesem Lösungsmittel die erforderliche Stabilität aufweist, werden mit besonderem Vorteil eine oder mehrere Hydroxamsäuren der allgemeinen Formel (I) verwendet, in der R für neo-Alkylreste der allgemeinen Formel (II) steht

$$R^2 - \underset{\underset{\displaystyle R^3}{|}}{\overset{\overset{\displaystyle R^1}{|}}{C}} - \qquad\qquad (II)$$

in der die Summe der C-Atome der Reste $R^1$, $R^2$ und $R^3$ im Bereich von 6 bis 18 liegt. Dies können die zahlreichen verschiedenen isomeren Reste aus der Gruppe neo-Heptyl, neo-Octyl, neo-Nonyl, neo-Decyl,

neo-Undecyl, neo-Dodecyl, neo-Tridecyl, neo-Tetradecyl, neo-Pentadecyl, neo-Hexadecyl, neo-Heptadecyl, neo-Octadecyl und neo-Nonadecyl sein. Die Einzelbedeutungen der Reste $R^1$, $R^2$ und $R^3$ sind in diesem Zusammenhang von untergeordneter Bedeutung, solange jeder der genannten Reste mindestens 1 C-Atom hat. Derartige neo-Alkylreste garantieren eine optimale Löslichkeit und Stabilität der als Extraktand verwendeten Hydroxamsäuren der allgemeinen Formel (I) in dem organischen Lösungsmittel bzw. Extraktionsmittel.

Die in dem erfindungsgemäßen Verfahren einsetzbaren Hydroxamsäuren der allgemeinen Formel (I) können nach allgemein aus dem Stand der Technik bekannten Verfahren hergestellt werden. So kann beispielsweise nach der DE-PA 22 10 106 die entsprechende Carbonsäure durch Umsetzung mit einem Überschuß an $SOCl_2$ in das entsprechende Säurechlorid überführt und dann mit Hydroxylamin zur Hydroxamsäure der allgemeinen Formel (I) umgesetzt werden. Entsprechend ist auch (vgl. J. Chem. Research (S) 1982, 90) die Umsetzung der Carbonsäure zum entsprechenden Alkylester und dessen nachfolgende Umsetzung mit Hydroxylamin zur entsprechenden Hydroxamsäure der allgemeinen Formel (I) möglich. Es können jedoch auch andere, aus dem Stand der Technik bekannte Verfahren zur Herstellung derartiger Verbindungen (I) angewendet werden.

In dem erfindungsgemäßen Verfahren zur gemeinsamen Abtrennung von Arsen, Antimon, Bismut und Eisen aus Wertmetall-Elektrolytlösungen haben sich insbesondere solche Hydroxamsäuren der allgemeinen Formel (I) bewährt, in der R für solche neo-Alkylreste der allgemeinen Formel (II) steht, deren Summen an C-Atomen der Reste $R^1$, $R^2$ und $R^3$ bei 8 bzw. im Bereich von 7 bis 17 liegen. Solche Hydroxamsäuren (I) werden nach den oben genannten Verfahren aus den unter dem Handelsnamen Versatic-Säure® von der Firma Shell Chemical Corporation erhältlichen Produkten hergestellt. Sie enthalten im einen Fall im Molekül der allgemeinen Formel (I) an der mit R bezeichneten Stelle einen neo-Alkylrest der allgemeinen Formel (II), in der die Summe der C-Atome der Reste $R^1$, $R^2$ und $R^3$ 8 ist, und im anderen Fall solche Verbindungen (I), in der der Rest R für neo-Alkylreste der allgemeinen Formel (II) steht, in der die Summe der C-Atome der Reste $R^1$, $R^2$ und $R^3$ im Bereich von 7 bis 17 liegt. Solche Produkte stellen ein technisches Gemisch von Hydroxamsäuren unterschiedlicher Kettenlänge dar. Sie ermöglichen den Einsatz in einem Extraktionsreagens, welches für die gewünschten Anwendungen optimale Eigenschaften besitzt, also nicht nur in der organischen Phase sehr gut löslich und stabil ist, sondern sich auch optimal mit den oben genannten Störelementen reversibel beladen läßt. Außerdem sind derartige Hydroxamsäuren in den in derartigen Wertmetall-Elektrolytlösungen üblichen pH-Wert-Bereichen äußerst stabil und extrahieren sowohl bei Raumtemperatur als auch im erhöhten Temperaturbereich keine freie Mineralsäure, insbesondere aus Kupfer-Elektrolytlösungen keine Schwefelsäure. Außerdem weisen derartige Hydroxamsäuren enthaltende organische Phasen eine Viskosität in einem solchen Bereich auf, daß nach dem nachfolgend besprochenen Durchmischungsvorgang eine optimale Phasentrennung gewährleistet ist. Probleme bei der Abtrennung der organischen von der wäßrigen Phase werden so vermieden.

Der zweite Schritt des erfindungsgemäßen Verfahrens besteht darin, die wäßrige und die organische Phase über eine ausreichende Kontaktierungszeit hinweg intensiv miteinander zu vermischen. Die Kontaktierungszeit der beiden Phasen ist einer der Parameter, von dem die extrahierte Menge der Störelemente, insbesondere die extrahierte Menge an Arsen, abhängig ist. Bei festgelegter Reagenzkonzentration, die nachfolgend im Detail angegeben wird, wird nach kurzer Kontaktierungszeit (3 bis 5 min) praktisch die Hauptmenge der Störelemente Antimon, Bismut und Eisen extrahiert. Die relative Menge an in die organische Phase aufgenommenem Arsen ist jedoch deutlich geringer. Dieser Sachverhalt erklärt sich aus der Tatsache, daß in typischen Elektrolytlösungen, insbesondere solchen des Kupfer-Raffinationsganges, deren Zusammensetzung je nach Qualität und Herstellung der Kupfer-Rohanoden schwanken, nur relativ geringe Mengen an Antimon, Bismut und Eisen (ca. 0,1 bis 0,6 g/l) enthalten sind, die Arsenmengen jedoch deutlich höher liegen (ca. 8 bis oberhalb von 20 g/l). Soll möglichst viel Arsen extrahiert werden, was angestrebt ist, so muß die Kontaktierungszeit entsprechend verlängert und/oder die Konzentration an Extraktand in der organischen Phase entsprechend erhöht werden. Zur Ausnutzung der maximalen Beladbarkeit der Hydroxamsäuren der allgemeinen Formel (I) werden die wäßrige und die organische Phase bevorzugt über eine Zeit von 1 bis 60 min, besonders bevorzugt über eine Zeit von 10 bis 20 min, intensiv miteinander gemischt. In dieser Zeit ist auch ein Großteil des in den Kupfer-Elektrolytlösungen enthaltenen Arsens in die organische Phase übergegangen.

Ein weiterer wichtiger Parameter für die extrahierte Menge der Störelemente liegt in der Konzentration an Hydroxamsäuren der allgemeinen Formel (I) oder deren Gemischen. Die Menge an Extraktand in der organischen Phase wird dadurch begrenzt, daß bei hohen Konzentrationen der Hydroxamsäuren (I) in der organischen Phase die Viskosität während der Beladung mit den Störelementen so stark ansteigt, daß bei einer kontinuierlichen Verfahrensweise eine effiziente Vermischung der beiden Phasen nicht mehr gewährleistet werden kann. Außerdem wird, wie oben beschrieben, die Trennung der organischen von der

wäßrigen Phase mit steigender Viskosität wesentlich erschwert. Daher ist es erfindungsgemäß bevorzugt, in dem erfindungsgemäßen Verfahren organische Lösungsmittel wie Kerosine oder deren Mischungen zu verwenden, die eine oder mehrere Hydroxamsäuren der allgemeinen Formel (I) in einer Konzentration von 0,1 bis 2,0 mol/l organische Phase, bevorzugt in einer Konzentration von 0,5 bis 1,0 mol/l organischer Phase, enthalten.

Die Temperatur, bei der die beiden Phasen miteinander in Kontakt gebracht werden, liegt üblicherweise im Bereich von 20 bis 70 °C, bevorzugt im Bereich von 30 bis 60 °C. Aus dem Verfahrensgang abgezogene Elektrolyt-Lösungen weisen verfahrensbedingt Temperaturen im Bereich von 50 bis 70 °C auf. Bei kontinuierlicher Verfahrensweise ist also ein gesondertes Erwärmen der Mischungen im Mixer nicht mehr erforderlich. Bei einer Temperatur im genannten Bereich werden beide Phasen intensiv miteinander gemischt. Dies kann beispielsweise dadurch geschehen, daß man sie in kontinuierlicher Verfahrensweise einem sogenannten "Mixer-Settler" zuführt, sie in diesem bei der angegebenen Temperatur über die angegebene Zeit miteinander vermischt und die Phasen im Settler abtrennen läßt. Man zieht in einem nach folgenden Verfahrensschritt die organische Phase, die eine oder mehrere Hydroxamsäuren der allgemeinen Formel (I) und die extrahierten Störelemente Arsen, Antimon, Bismut und Eisen enthält, von der wäßrigen Phase ab.

Der nächste Schritt des erfindungsgemäßen Verfahrens besteht darin, die organische phase mit einem Sulfidierungsmittel zu versetzen. Dieser Verfahrensschritt ist in dem erfindungsgemäßen Verfahren insofern von Bedeutung, als die Extraktion der Störelemente aus Wertmetall-Elektrolytlösungen bei sehr hohen Mineralsäurekonzentrationen (z.B. 150 bis 250 g $H_2SO_4$/l) erfolgt. Eine üblicherweise für die Reextraktion von Störelementen mögliche Erhöhung der Säurekonzentration scheidet für die Abtrennung der Störelemente aus derart sauren Lösungen praktisch aus. Außerdem kann auch eine Reextraktion der Störelemente durch Behandlung der organischen Phase mit alkalischen Lösungen nicht erfolgen, da die Hydroxamsäuren der allgemeinen Formel (I), insbesondere im stärker alkalischen Bereich, nicht genügend stabil sind. Die entsprechend dem erfindungsgemäßen Verfahren direkt an der beladenen organischen Phase durchführbare Sulfidfällung der Störelemente umgeht in einfacher und überraschender Weise die Notwendigkeit einer Reextraktion der Störelemente aus der organischen Phase durch Behandlung mit stark sauren oder stark alkalischen wäßrigen Lösungen.

Als Sulfidierungsmittel eignen sich in dem erfindungsgemäßen Verfahren Schwefelwasserstoff-($H_2S$-)Gas und/oder wasserfreies Natriumsulfid. Vorzugsweise wird Schwefelwasserstoff verwendet. Dieser ist für den Fällungsschritt besonders gut geeignet, da er zwei Funktionen gleichzeitig ausübt: Zum einen wirkt $H_2S$ als Reagens für die Fällung von Arsen, Antimon und Bismut aus der organischen Phase, zum anderen regeneriert er (aufgrund seiner "sauren" Eigenschaften) das Extraktionsreagens (die Hydroxamsäure(n)) der allgemeinen Formel (I).

Bei der Anwendung der direkten Sulfidfällung aus der organischen Phase unter Einsatz von Schwefelwasserstoff sind als wichtige kontrollierende Verfahrensparameter der Schwefelwasserstoffdruck, die Temperatur während des Fällungsvorganges sowie die Reaktionszeit zu nennen. Die genannten Parameter können in großer Bandbreite variiert werden. Zur Fällung der Sulfide der Störelemente ist die Zugabe einer stöchiometrischen oder geringfügig überstöchiometrischen Menge gasförmigen Schwefelwasserstoffs ausreichend. Diese wird dadurch bewirkt, daß $H_2S$ in der anhand der Mengen der Störelemente im Elektrolyten vorberechneten Menge eingeleitet und das Reaktionssystem mit einem Inertgas, z.B. $N_2$ (1 bis 3 bar), beaufschlagt wird. Es ist jedoch auch möglich, den $H_2S$-Druck im Verlaufe des Fällungsvorganges auf einen Wert von 1 bis 50 bar, bevorzugt auf einen Wert im Bereich von 1 bis 3 bar, einzustellen. Ein $H_2S$-Überdruck begünstigt insbesondere die Fällung der Arsensulfide. Bei Anwendung eines geringen Überdrucks (1 bis 3 bar) kann die Fällungsreaktion in einem geeigneten Glasgefäß durchgeführt werden; der Einsatz aufwendiger Metall-Autoklaven ist also nicht erforderlich. Möchte man dagegen höhere Drücke (4 bar und höher) anwenden, so ist im allgemeinen die Verwendung eines Autoklaven erforderlich. Vorteilhaft ist jedoch, daß der Einsatz hoch-korrosionsbeständiger und damit teurer Autoklaven-Materialien (z.B. Hasteloy-Stähle) nicht notwendig ist; es können Autoklaven aus üblichen Stählen (beispielsweise V4A-Stählen) verwendet werden.

Die Vollständigkeit der Fällung wird auch durch einen weiteren Verfahrensparameter, nämlich die Temperatur, beeinflußt. Bei höheren Reaktionstemperaturen, die bevorzugt im Bereich zwischen 40 und 90 °C liegen, wird eine vollständige Fällung der Sulfide der Störelemente Arsen, Antimon und Bismut in der organischen Phase erreicht.

Der dritte Verfahrensparameter, die Reaktionszeit, ist ebenfalls von Bedeutung für die Vollständigkeit der Fällung und entspricht im wesentlichen der Verweilzeit der organischen Phase im Reaktionsgefäß während der Einleitung von $H_2S$. Die Reaktionszeit muß in Abhängigkeit von den anderen genannten Parametern eingestellt werden und liegt in bevorzugten Ausführungsformen des erfindungsgemäßen Verfahrens bei 1 bis 60 min, bevorzugt bei 5 bis 20 min.

Eine Abstimmung der sich gegenseitig beeinflussenden Parameter der Sulfidierungsreaktion kann durch wenige einfache Versuche erfolgen. Besonders haben sich bei der Durchführung des erfindungsgemäßen Verfahrens eine Reaktionsführung bei 2 bar $H_2S$-Druck, eine Reaktionszeit von 15 min und eine Temperatur der beladenen Organophase beim Einleiten des Schwefelwasserstoffes von 80 °C bewährt. Bei diesen Reaktionsbedingungen werden die Störelemente Antimon und Bismut zu 100 % und Arsen zu einem großen Teil (80 % und höher) gefällt. Für eine komplette Ausfällung des Arsens ist gegebenenfalls eine weitere Druckerhöhung über diesen besonders bevorzugten Bereich hinaus oder eine entsprechend längere Reaktionszeit erforderlich.

Durch Einleiten von $H_2S$ in die Organophase werden die Störelemente Arsen, Antimon und Bismut als Sulfide gefällt und können nach abgeschlossener Fällung auf an sich bekannten Wegen von der Organophase abgetrennt werden. Dies geschieht üblicherweise dadurch, daß die Organophase über ein Filter geeigneter Größe filtriert oder auch zentrifugiert wird. Es ist jedoch auch möglich, die gebildeten Sulfid-Fällungen des Arsens, Antimons und Bismuts im Reaktionsmedium sich absetzen zu lassen und die überstehende Organophase zu dekantieren. Welcher Weg der Abtrennung im einzelnen gewählt wird, hängt von der Konsistenz der gebildeten Sulfid-Fällungen und von weiteren Verfahrensparametern ab und ist ohne kritischen Einfluß auf die Vollständigkeit der Wiedergewinnung der Störelemente. Um die gefällten Sulfide von Rückständen organischer Komponenten zu befreien ist es möglich, sie mit jedem beliebigen organischen Lösungsmittel, beispielsweise mit Kohlenwasserstoffen der oben angegebenen Art oder auch mit anderen, für derartige Waschzwecke geeigneten Lösungsmitteln, wie Aceton, flüchtigen Estern o.ä., zu waschen. Dadurch läßt sich eine vollständige Abtrennung organischer Komponenten vom Filterkuchen erreichen.

Außerdem ist es erwünscht, für die nachfolgende Abtrennung des Eisens aus der Organophase möglichst das gesamte darin gelöste $H_2S$ zu entfernen. Es wird deswegen als besonders vorteilhaft angesehen, nach der Abfiltration der ausgefällten Sulfide und vor dem oben beschriebenen Schritt des Waschens mit einem organischen Lösungsmittel den Filterkuchen und die Organophase mit einer Säure, vorzugsweise einer Mineralsäure, wie Schwefelsäure, zu behandeln. Dadurch werden Restmengen von $H_2S$ ausgetrieben. Die Behandlung kann durch Kontaktierung des Filterkuchens und der Organophase mit der Mineralsäure in einem separaten geschlossenen Gefäß unter intensiver Vermischung erfolgen. Eine kontinuierliche Ausbildung dieses Waschschrittes ist möglich, wobei die verwendete Mineralsäure dann im Kreislauf geführt und für den Reinigungsschritt nachfolgender Chargen zur Verfügung gestellt werden kann.

Wie bereits oben erwähnt, wird das durch eine oder mehrere Hydroxamsäuren (I) aus der Wertmetall-Elektrolytlösung in die Organophase überführte Eisen unter den oben näher definierten Bedingungen nicht gefällt. Eine Reextraktion des Eisens durch Behandlung der Organophase mit basischen wäßrigen Lösungen ist aufgrund der geringen Stabilität der Extraktanden (Hydroxamsäuren) nicht möglich, ohne einen Großteil zu verlieren. Wenn eine Abtrennung des Eisens aus der Organophase erwünscht ist, wird diese erfindungsgemäß dadurch bewirkt, daß man die Organophase nach der Abtrennung der anderen Störelemente als Sulfide und einer Entfernung überschüssigen Schwefelwasserstoffs mit einem wasserlöslichen Komplexbildner für Eisen unmittelbar oder mit einer wäßrigen Lösung eines derartigen Komplexbildners versetzt. Als wasserlösliche Komplexbildner für Eisen werden Verbindungen aus der Gruppe Chlorwasserstoff, Oxalsäure oder P-organische Säuren, insbesondere Hydroxyethandiphosphonsäure (HEDP) bevorzugt, also solche Komplexbildner, von denen eine hohe Affinität zum Eisen bekannt ist. Von diesen sind Oxalsäure oder Chlorwasserstoff besonders bevorzugt.

Die Abtrennung des Eisens als anorganischer Chloro-Komplex oder Oxalat bzw. Phosphonat ist, wie auch die anderen Schritte, von der Konzentration des Komplexbildners in der Organophase oder - bei Zugabe wäßriger Lösungen des Komplexbildners - in der wäßrigen Phase, der Behandlungszeit der Organophase mit dem Komplexbildner oder seiner wäßrigen Lösung sowie der Reaktionstemperatur abhängig; wie oben schon angegeben, stehen die genannten Verfahrensparameter auch in einer wechselseitigen Abhängigkeit. Es hat sich in der Praxis gezeigt, daß die Konzentration an wasserlöslichem Komplexbildner für Eisen in der Organophase oder der wäßrigen Phase mit Vorteil bei Werten von 0,1 bis 2 mol des Komplexbildners pro Liter, bevorzugt bei einer Konzentration von 0,5 bis 1 mol des Komplexbildners pro Liter, liegen kann. Bei kontinuierlicher Betriebsweise des Eisen-Komplexierungs-Schrittes, die bevorzugt in einem Mixer-Settler durchgeführt wird, sind bei solchen Komplexbildnerkonzentrationen Kontaktierungszeiten von 1 bis 20 min, bevorzugt von über 5 bis 15 min, erforderlich. Diese Behandlungszeiten gelten für eine Durchführung des Komplexierungsschrittes bei Raumtemperatur und können entsprechend reduziert werden, wenn die Temperatur angehoben wird. Besonders bevorzugt ist es, die Organophase mit 1 mol Oxalsäure oder HEDP pro Liter Organophase oder wäßrige Phase über eine Kontaktierungszeit von 15 min in einem Mixer-Settler zu behandeln. Bei einer solchen Behandlungsweise kann aus der Organophase, die die Sulfid-Fällungsstufe durchlaufen hatte und die danach noch 0,6 g Eisen/l enthielt, der Eisengehalt bis auf 0,07 g/l, d.h. um nahezu eine Zehnerpotenz, reduziert werden.

Wenn der Komplexbildner unmittelbar der Organophase zugesetzt wird, wird der auf dem oben beschriebenen Wege gebildete Eisenkomplex auf an sich bekanntem Wege mit Wasser aus der Organophase reextrahiert. Dazu wird die Organophase mit einer ausreichenden Menge Wasser in innigen Kontakt gebracht, wobei aufgrund der guten Wasserlöslichkeit des Eisenkomplexes ein vollständiger Übergang in die wäßrige Phase beobachtet wird. Bei Zugabe wäßriger Komplexbildner-Lösungen enthalten diese nach inniger Vermischung mit und anschließender Separierung von der Organophase nahezu das gesamte aus den Elektrolyse-Lösungen extrahierte Eisen. Aus dieser wäßrigen Phase kann nach an sich bekannten Methoden das Eisen, sofern erwünscht, wiedergewonnen werden.

Bei der Verwendung von Chlorwasserstoff als wasserlöslichem Komplexbildner für Eisen wird das in der Organophase enthaltene Eisen vollständig in einen anorganischen Chlorokomplex überführt. Um eine Recyclisierung der organischen Phase und der darin enthaltenen Hydroxamsäuren und damit Bereitstellung für einen neuen Extraktionscyclus zu ermöglichen, muß die Organophase weitgehend, wenn nicht vollständig, von Chlorwasserstoff bzw. freien Chloridionen befreit werden. Dazu wird nach Überführung des in der Organophase gelösten Eisens in die anionische Komplexform durch Zusatz einer ausreichenden Menge Chlorwasserstoff die Organophase mit einem sekundären Amin als flüssigem Ionenaustauscher, beispielsweise mit dem unter dem Handelsnamen "Amberlite® LA2" erhältlichen Ionenaustauscher, erneut extrahiert. Das auf diese Weise extrahierte Eisen kann mit Wasser anschließend wieder reextrahiert werden. Die Organophase wird anschließend mit Wasser chloridfrei gewaschen, um sie und die darin enthaltenen Hydroxamsäuren für eine erneute Verwendung im Extraktionskreislauf brauchbar zu machen. Eine bis zwei Stufen des Waschens mit Wasser bewirken eine Absenkung des Chloridgehaltes in der Organophase unter 50 ppm, bei kontrollierter Verwendung des eingeleiteten Chlorwasserstoffes sogar unter 30 ppm. Bevorzugt wird eine Absenkung des Chloridgehalts in der Organophase auf wenige ppm. Die resultierende, die Hydroxamsäure(n) enthaltende Organophase kann anschließend unmittelbar wieder zur Extraktion der Störelemente eingesetzt werden.

Die Fällung des Eisens kann außer durch Zusatz gasförmigen Chlorwasserstoffs auch dadurch erfolgen, daß man die Organophase mit wäßriger Chlorwasserstoffsäure (Salzsäure) behandelt, wobei sich in der Praxis der Einsatz von 1 bis 12-molarer HCl, vorzugsweise von 3 bis 8-molarer HCl, bewährt hat. Insgesamt ist hinsichtlich der Konzentration an Chlorwasserstoff sicherzustellen, daß die Menge der als wasserlösliche Komplexbildner anzusehenden Chloridionen im oben angegebenen Bereich, also bei 0,1 bis 1 mol des Komplexbildners pro Liter organischer Phase liegt. Dabei wird sichergestellt, daß das gesamte Eisen in die Form eines anorganischen Chloro-Komplexes überführt wird. Dieser wird dann nach Zusatz von Wasser mit der wäßrigen, anorganischen Phase von der Organophase abgetrennt und enthält das gesamte, vorher mit der Organophase extrahierte Eisen.

Auch in diesem Fall erweist es sich als sehr vorteilhaft, daß die Hydroxamsäuren der allgemeinen Formel (I) keine nennenswerten Mengen freier Salzsäure (ähnlich wie oben für $H_2SO_4$ angegeben) extrahieren. Außerdem werden durch die Reextraktion des Eisens in Form eines Chlorokomplexes keine schwer wasserlöslichen Chloridsalze gebildet, die dann durch behandlung der Organophase mit Wasser nicht entfernbar wären.

Prinzipiell läßt sich der Verfahrensschritt der Komplexierung des Eisens auch mit in den Schritt der Fällung der Störelemente Arsen, Antimon und Bismut als Sulfide aus der beladenen organischen Phase einbeziehen. Es müssen dann die entsprechenden Reextraktionsmittel zusammen mit der organophase im Fällungsgefäß, das bei hohem Druck des einzulietenden Schwefelwasserstoffs auch ein Autoklav sein kann, vorgelegt werden. Die Fällungsreaktion der Elemente Arsen, Antimon und Bismut läuft dann genauso ab, wie dies oben für die separate Trennung beschrieben wurde. Die Elemente Arsen, Antimon und Bismut werden als schwer lösliche Sulfide gefällt, und Eisen wird in diesem Fall gleichzeitig in das jeweils verwendete Reextraktionsmedium (wäßrige Komplexbildnerphase) überführt. Bei Anwendung von Chlorwasserstoff als Reextraktionsmedium ist allerdings dann im Vergleich zur vorher beschriebenen getrennten Aufarbeitung der Eisenkomplexe der Einsatz von korrosionsbeständigen Autoklavenmaterialien erforderlich, da Chlorwasserstoff die weniger korrosionsbeständigen Stähle angreift.

In ähnlicher Weise kann auch der Verfahrensschritt der Eisen-Reextraktion der Sulfidfällung vorgeschaltet werden. Wird z.B. wäßrige HCl als Komplexbildner für Eisen verwendet, so enthält dann die reextrahierte Eisenphase zusätzlich noch Antimon und auch noch geringe Mengen an Arsen. Dies bedeutet, daß man aus der gewonnenen wäßrigen chloridischen Phase das Eisen nicht ohne weiteres, d.h. ohne eine Abtrennung von Antimon und Arsen, reextrahieren kann. Aus diesen Gründen ist die zuerst beschriebene Verfahrensweise, d.h. die Reihenfolge Sulfidfällung - Abtrennung der Sulfide - nachfolgende oder gemeinsame Eisen-Extraktion bzw. -Reextraktion, bevorzugt.

Die nach der Abtrennung der genannten Störelemente verbleibende wäßrige Phase wird auf an sich bekannten Wegen aufgearbeitet. Dies kann im Falle der Aufarbeitung von Kupfer-Elektrolytlösungen z.B. darin bestehen, daß - in Abhängigkeit von den für die Verhüttung des Kupfers eingesetzten Erzen - noch weitere Störelemente, beispielsweise Nickel, entfernt werden. Außerdem ist an dieser Stelle streng darauf zu achten, daß die erhaltene Organophase im wesentlichen nur aus den verwendeten Lösungsmitteln bzw. Extraktionsmitteln und den Extraktanden, d.h. einer oder mehrerer der oben genannten Hydroxamsäuren der allgemeinen Formel (I), besteht. Eine solche Organophase ist dann unmittelbar für den Wiedereinsatz im Extraktionskreislauf geeignet. Gegebenenfalls kann sie mit den erforderlichen Mengen an Extraktand, d.h. an einer oder mehreren der oben genannten Hydroxamsäuren der allgemeinen Formel (I) nachgeschärft werden und wird dann anschließend unmittelbar in den Extraktionsgang recyclisiert. Die genannte Verfahrensweise kann kontinuierlich dadurch erfolgen, daß permanent eine bestimmte Menge der Kupfer-Raffinations-Elektrolytlösung aus der Elektrolysevorrichtung abgezogen und den oben beschriebenen Reinigungsschritten unterzogen wird. Es ist jedoch auch möglich, diskontinuierlich zu arbeiten und die Mengen der Kupfer-Raffinations-Elektrolytlösung in kleinen Teilmengen abzuziehen und die mit den Störelementen beladene organische Phase in einem Tank zu sammeln. Die gesammelten Mengen der beladenen Organophase werden dann gemeinsam den oben beschriebenen Fällungs- und Reextraktionsschritten unterworfen.

Die nach der Sulfidfällung angefallenen schwerlöslichen Sulfidniederschläge des Arsens, Antimons und Bismuts enthalten - in Abhängigkeit von dem zur Verhüttung der Roherze verwendeten Ausgangsmaterial - meist mehr oder weniger große Mengen an Arsensulfid neben kleinen Mengen der Sulfide des Antimons und Bismuts. Eine typische Zusammensetzung des Sulfid-Filterkuchens ist: ca. 43,5 % As; ca. 49,0 % S; ca. 3 % Sb; ca. 0,2 % Bi. Aus derartigen Sulfid-Filterkuchen können diejenigen Elemente, die für bestimmte technische Anwendungen interessant sind (z.B As und Sb für die Elektronik-Industrie) über an sich bekannte Methoden, beispielsweise über schmelzmetallurgische und/oder hydrometallurgische Wege, zurückgewonnen werden.

Außerdem ist es üblich, nach Abtrennung des Eisens auch dieses aus den Reextraktionslösungen zurückzugewinnen. Dies wird ebenfalls auf an sich bekannten, meist hydrometallurgischen Wegen erreicht.

Üblicherweise werden bei den meisten Anwendungen des erfindungsgemäßen Verfahrens in der Aufarbeitung von Kupfer-Raffinationselektrolyse-Lösungen alle genannten Verfahrensschritte durchgeführt. Es ist jedoch im Verlauf der Aufarbeitung von Elektrolyse-Lösungen aus der Gewinnung von Kupfer und anderen Wertmetallen auch möglich und - je nach praktischem Anwendungsbereich auch von Bedeutung - einzelne Verfahrensschritte auszulassen. Dies kann z.B. dann erforderlich sein, wenn die zur Verhüttung der Wertmetalle verwendeten Roherze bestimmte Störelemente, wie beispielsweise Eisen, nicht enthalten oder wenn die Entfernung des Eisens aus der Extraktionslösung aufgrund zu geringer Mengen nicht erforderlich ist. Das erfindungsgemäße Verfahren hat damit den Vorteil, auf alle anwenderbezogenen Probleme eingestellt und den jeweiligen Erfordernissen angepaßt werden zu können.

Weitere Vorteile des erfindungsgemäßen Verfahrens gegenüber bekannten Verfahren sind darin zu sehen, daß sich die erfindungsgemäß für die Extraktion der Störelemente aus den Elektrolyselösungen verwendeten Hydroxamsäuren sehr gut in den Lösungsmitteln lösen, die bevorzugt in Flüssig/Flüssig-Extraktionsverfahren (Solvent-Extraktionsverfahren) Anwendung finden. Bei vergleichsweise niedriger Konzentration der Hydroxamsäuren (I) wird eine hohe Beladung der organischen Phase mit den Störelementen erreicht und die Viskosität der Organophase nicht auf kritische Werte erhöht. Dies hat eine optimale Trennung der organischen von der wäßrigen Phase zur Folge. Die genannten Störelemente lassen sich gemeinsam in einem Verfahrensschritt extrahieren.

Außerdem ist der bei den aus dem Stand der Technik bekannten Verfahren erforderliche Modifier (Tridecanol bzw. Nonylphenol) nicht erforderlich. Die Hydroxamsäuren (I) extrahieren keine Säure aus der Elektrolytlösung und sind zudem bei hoher Säurekonzentration der Ausgangselektrolyte und bei den über einen weiten Bereich variierbaren Verfahrensbedingungen vollständig stabil.

Weiterhin ist es als vorteilhaft anzusehen, daß die Störelemente Arsen, Antimon und Bismut durch Sulfidfällung und das Störelement Eisen durch Komplexbildung unmittelbar aus der organischen Extraktionsphase abgetrennt werden können und diese dadurch problemlos wieder in einen neuen Extraktionsgang zurückgeführt werden kann. Die als Extraktanden verwendeten Hydroxamsäuren der allgemeinen Formel (I) sind dabei auch mit den Fällungs- bzw. Komplexierungsreagenzien ohne weiteres verträglich.

Für das Gesamtverfahren ist est als besonders vorteilhaft anzusehen, daß sowohl die Extraktion mit der eine oder mehrere Hydroxamsäuren enthaltenden organischen Phase als auch die Fällung und Reextraktion der extrahierten Störelemente mit einer geringen Anzahl von Verfahrensstufen bewirkt werden kann.

Die hohe Effizienz der jeweiligen Extraktions-, Fällungs- und Reextraktionsschritte und die Möglichkeit, die Verfahrensschritte auch in unterschiedlicher Reihenfolge zu kombinieren, machen das erfindungsgemäße Verfahren geeignet, verschiedenen Anwender-Anforderungen angepaßt zu werden. Eine derartig hohe Flexibilität bieten nach dem Stand der Technik bekannte Verfahren der Beseitigung von Störelementen aus Elektrolyselösungen zur Wertmetallgewinnung, insbesondere aus Kupfer-Raffinationselektrolyse-Lösungen nicht.

Die Erfindung wird durch die nachfolgenden Beispiele näher erläutert.

Beispiel 1

Mit dem erfindungsgemäßen Verfahren kann die Extraktion der Störelemente aus einer Praxis-Elektrolytlösung (entnommen einer Kupfer-Raffinationselektrolyse) in kontinuierlicher Weise in einem Mixer-Settler durchgeführt werden. In Abhängigkeit von der Zusammensetzung der eingesetzten Kupfer-Raffinationselektrolyse-Lösung (in g/l: 10,4 As, 0,028 Bi, 0,32 Sb, 0,28 Fe, 54,3 Cu, 9,6 Ni und 153,0 $H_2SO_4$) und den oben bei den Verfahrensteilschritten beschriebenen relevanten Parametern ist nur eine geringe Extraktionsstufenzahl erforderlich.

Als organisches Lösungsmittel bzw. Extraktionsmittel wurde das im Handel unter dem Namen "Escaid® 100" erhältliche Kerosin der Firma Esso verwendet. Die eingesetzte Hydroxamsäure war aus einem Gemisch von Carbonsäuren der Formel

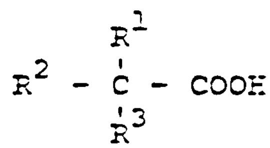

hergestellt worden, in der die Summe der Zahl der C-Atome der Substituenten $R^1$, $R^2$ und $R^3$ im Bereich zwischen 7 und 17 lag (Handelsprodukt Versatic® 1019 der Firma Shell). Die Konzentration an Extraktand in der organischen Phase lag bei 0,5 mol/l.

In einem Schüttelversuch (O/A-Verhältnis 1 : 1) wurde bei einer Verweilzeit von 15 min eine Extraktion der vier Störelemente As, Sb, Bi und Fe durchgeführt.

Die drei erstgenannten Elemente wurden nach Trennung der organischen von der wäßrigen Elektrolytphase vollständig durch $H_2S$ unmittelbar aus der Organophase gefällt und anschließend durch Filtration abgetrennt.

Aus der organischen Phase wurde anschließend mit wäßriger Oxalsäure (Konzentration: 1 mol/l) Eisen komplexiert. Bei einer Verweilzeit von 15 min und einem O/A-Verhältnis von 1 : 1 wurde in zwei Extraktionsstufen der Eisengehalt von ursprünglich 0,6 g Fe/l in der organischen Phase auf 0,07 g Fe/l gesenkt.

Aus der verbliebenen, stark schwefelsauren Elektrolyselösung wurde Kupfer ohne Verluste durch Gewinnungselektrolyse in hochreiner Form gewonnen und Nickel wie üblich als Sulfat gefällt und getrennt aufgearbeitet.

Beispiel 2

Entsprechend der in Beispiel 1 angegebenen Vorgehensweise wurden an Praxis-Elektrolyselösungen aus dem Kupfer-Raffinationselektrolyse-Gang Extraktionstest vorgenommen. Die Bedingungen waren:
Zusammensetzung der Elektrolyten:
In den Beispielen 2a und 2c (in g/l):
Cu: 32; Ni: 19,5; Fe: 0,52; Bi: 0,03; Sb: 0,49 und As: 21,5.
In den Beispielen 2b und 2d (in g/l):
Cu: 34,4; Ni: 21,5; Fe: 0,5; Bi: 0,03; Sb: 0,49 und As: 19,7.

| | |
|---|---|
| Temperatur: | Raumtemperatur (Beispiele 2a und 2c) bzw. 55 °C (Beispiele 2b und 2d). |
| Extraktand: | Hydroxamsäure (I) aus Versatic® 1019 (Beispiele 2a und 2b) (R = (II), worin die Summe der C-Zahlen der Reste $R^1$, $R^2$ und $R^3$ im Bereich von 7 bis 17 liegt). Hydroxamsäure (I) aus Versatic® 10 (Beispiele 2c und 2d) (R = (II), in der die Summe der C-Zahlen der Reste $R^1$, $R^2$ und $R^3$ bei 8 liegt). |
| Organisches Lösungsmittel: | Escaid® 100 (handelsübliches Kerosin der Firma Esso). |

O/A-Verhältnis: 1 : 1.

Kontaktierungszeit (Schüttelzeit): 15 min.
Schwefelsäure-Konzentration: 225 g/l.

Die Ergebnisse der Extraktionstest sind den nachfolgenden Tabellen 1 und 2 zu entnehmen.

Tabelle 1

| Extraktionstest mit Versatic® 1019-Hydroxamsäure (I, R= (II) mit $C_{R1-R3}$ = 7 - 17) v = vollständige Extraktion | | | | | | | | | |
|---|---|---|---|---|---|---|---|---|---|
| Konz. (I) (M) | Extr. Störelemente | Beispiel 2a | | | | Beispiel 2b | | | |
| | | Fe | Bi | Sb | As | Fe | Bi | Sb | As |
| 0,1 | (g/l)<br>(%) | 0,16<br>31 | v<br>100 | 0,10<br>20 | 1,42<br>7 | 0,01<br>2 | v<br>100 | 0,30<br>61 | 1,63<br>8 |
| 0,5 | (g/l)<br>(%) | 0,30<br>58 | v<br>100 | 0,26<br>53 | 7,24<br>34 | 0,26<br>52 | v<br>100 | 0,50<br>100 | 7,5<br>38 |
| 1,0 | (g/l)<br>(%) | 0,39<br>75 | v<br>100 | 0,29<br>59 | 9,83<br>46 | 0,5<br>100 | v<br>100 | 0,5<br>100 | 12,7<br>64 |

Tabelle 2

| Extraktionstest mit Versatic® 10-Hydroxamsäure (I, R= (II) mit $C_{R1-R3}$ = ca. 8) v = vollständige Extraktion | | | | | | | | | |
|---|---|---|---|---|---|---|---|---|---|
| Konz. (I) (M) | Extr. Störelemente | | Beispiel 2c | | | | Beispiel 2d | | |
| | | Fe | Bi | Sb | As | Fe | Bi | Sb | As |
| 0,1 | (g/l)<br>(%) | 0,30<br>58 | v<br>100 | 0,31<br>69 | 0,95<br>5 | 0,10<br>20 | v<br>100 | 0,36<br>73 | 1,47<br>8 |
| 0,25 | (g/l)<br>(%) | 0,38<br>73 | v<br>100 | 0,32<br>72 | 4,03<br>19 | | | | |
| 0,5 | (g/l)<br>(%) | 0,42<br>80 | v<br>100 | 0,35<br>78 | 7,62<br>36 | 0,48<br>96 | v<br>100 | 0,50<br>100 | 6,9<br>35 |

Beispiel 3

Aus einer Praxis-Elektrolytlösung (Zusammensetzung (in g/l): As: 16,6; Sb: 0,32; Bi: 0,04; Fe: 0,4; Cu: 32,0 und Ni: 19,5; $H_2SO_4$: 225) wurde entsprechend der in Beispiel 1 angegebenen Vorgehensweise mit den beiden Hydroxamsäuren aus "Versatic® 1019" und "Versatic® 10", Arsen, Antimon, Bismut und Eisen extrahiert. Die weiteren Versuchsbedingungen waren:
organisches Lösungsmittel: Escaid® 100 (Firma Esso);
O/A-Verhältnis: 1 : 1;
Kontaktierungszeit (Schüttelzeit): 15 min;
Temperatur: Raumtemperatur.

In den Fig. 1 bis 4 wird das Extraktionsverhalten der jeweiligen Hydroxamsäuren für die Störelemente Antimon und Eisen (Fig. 1 und 3) und das Element Arsen (Fig. 2 und 4) in Abhängigkeit von der Konzentration der jeweiligen Hydroxamsäure in der organischen Phase aufgezeigt.

Fig. 1 und 2 zeigen das Verhalten der aus "Versatic® 1019" erhaltenen Hydroxamsäure, Fig. 3 und 4 das Verhalten der aus "Versatic® 10" erhaltenen Hydroxamsäure.

Aus Gründen des Maßstabes (zu geringe Mengen an Bismut) wurden die Bi-Extraktionswerte nicht mit eingetragen. Bi wird in allen Fällen vollständig extrahiert.

Beispiel 4

Entsprechend den in Beispiel 1 beschriebenen Reaktionsbedingungen wurden aus einer Praxis-Elektrolytlösung, deren Gehalte an Eisen, Antimon und Arsen der nachfolgenden Tabelle 3 zu entnehmen sind und die die in Beispiel 3 angegebenen Mengen an Kupfer und Nickel enthielt, Extraktionen mit einer 0,5 molaren Lösung der Hydroxamsäuren (I) aus "Versatic® 1019" in dem Kerosin "Escaid® 100" (Firma Esso) durchgeführt. Das O/A-Verhältnis betrug 1 : 1. Die Extraktionen wurden bei Raumtemperatur und bei 60 °C durchgeführt.

Die Mengen an extrahierten Störelementen Eisen, Antimon und Arsen in Abhängigkeit von der Kontaktierungszeit (Schüttelzeit) bei unterschiedlichen Temperaturen sind der nachfolgenden Tabelle 3 zu entnehmen. Die geringen Bismut-Mengen wurden umgehend in die organische Phase extrahiert.

Tabelle 3

Abhängigkeit der Extraktion von der Kontaktierungszeit für 0,5 molare Hydroxamsäure aus "Versatic® 1019". Der Bi-Ausgangsgehalt von 0,03 g/l wird vollständig extrahiert.

| Extrahierte Menge in g/l nach min | Fe g/l | Fe % | Sb g/l | Sb % | As g/l | As % |
|---|---|---|---|---|---|---|
| Ausgangsgehalt | 0,34 | | 0,33 | | 12,8 | |
| **RT** | | | | | | |
| extrahierte Menge | | | | | | |
| nach 1 min | 0,22 | 65 | 0,17 | 52 | 1,21 | 9,5 |
| 3 " | 0,25 | 74 | 0,24 | 71 | 1,90 | 15 |
| 5 " | 0,30 | 88 | 0,22 | 64 | 3,14 | 25 |
| 15 " | 0,33 | 98 | 0,26 | 76 | 5,84 | 46 |
| 30 " | 0,34 | 100 | 0,29 | 87 | 6,95 | 54 |
| 60 " | 0,34 | 100 | 0,31 | 94 | 7,12 | 56 |
| **60 °C** | | | | | | |
| extrahierte Menge | | | | | | |
| nach 1 " | 0,29 | 85 | 0,30 | 91 | 2,06 | 16 |
| 3 " | 0,34 | 100 | 0,32 | 94 | 5,00 | 39 |
| 5 " | 0,31 | 91 | 0,28 | 82 | 6,32 | 49 |
| 15 " | 0,22 | 65 | 0,33 | 100 | 7,61 | 59 |
| 30 " | 0,27 | 79 | 0,33 | 100 | 7,68 | 60 |
| 60 " | 0,26 | 76 | 0,33 | 100 | 7,67 | 60 |

Beispiel 5

Entsprechend der in Beispiel 3 beschriebenen Verfahrensweise wurden Extraktionen mit einer 1,0 molaren Lösung der Hydroxamsäuren (I) aus "Versatic® 1019" und einer 0,5 molaren Lösung der Hydroxamsäuren (I) aus "Versatic® 10" an Praxiselektrolytlösungen durchgeführt, deren Zusammensetzung in Beispiel 3 angegeben wurde. Bei Extraktionen bei Raumtemperatur läßt sich das Extraktionsverhalten der jeweiligen Hydroxamsäuren in Abhängigkeit von der Zeit, d.h. die Menge an Störelement in g/l organischer Phase in Abhängigkeit von der Kontaktzeit (Schüttelzeit) durch die Fig. 5 bis 8 darstellen. Fig. 5 und 6 zeigen das Verhalten der aus "Versatic® 1019" erhaltenen Hydroxamsäuren, Fig. 7 und 8 das Verhalten der aus "Versatic® 10" erhaltenen Hydroxamsäuren.

Beispiel 6

Das Extraktionsverhalten der Hydroxamsäuren (I) aus "Versatic® 1019" in "Escaid® 100" als organischem Lösungsmittel (Konzentration: 0,5 M) hinsichtlich der Extraktion von Arsen(III) neben Arsen(V) wurde bei einem künstlichen Testelektrolyten (Gehalt an Arsen: Siehe nachfolgende Tabelle 4; Gehalt an Schwefelsäure: 225 g $H_2SO_4$/l) bei einem O/A-Verhältnis von 1 : 1 und einer Kontaktierungszeit (Schüttelzeit) von 15 min getestet. Die Ergebnisse sind der nachfolgenden Tabelle 4 zu entnehmen.

Tabelle 4

| As (III)/AS (V)-Extraktion durch Hydroxamsäure aus "Versatic® 1019" | | |
|---|---|---|
| Ausgangsgehalt (g/l) (Testelekrolyt) | 14,6 As III | 14,1 As V |
| extrahierte As-Menge (g/l) * | 8,4 | 6,2 |
| % As-Extraktion | 58 | 44 |

* = Bestimmung in der org. Phase

Beispiel 7 und Vergleichsbeispiel 1

Entsprechend der in Beispiel 2 beschriebenen Vorgehensweise wurde mit Hydroxamsäure aus "Versatic® 1019" (30 % in Escaid® 100 als organischem Lösungs/Extraktionsmittel) die Arsen-Extraktion aus dem Praxis-Elektrolyten bei einer Temperatur von 50 °C und einer Kontaktierungszeit (Schüttelzeit) von 15 min getestet. Die Ergebnisse sind der nachfolgenden Tabelle 5 zu entnehmen.

Die Werte für die As-Extraktion mit TBP sind "A. de Schepper; MHO solvent extraction process ...; Extraction Metallurgy '85 Symposium; The Institution of Mining and Metallurgy" entnommen.

Tabelle 5

Extraktionsverhalten von Hydroxamsäure aus "Versatic[R] 1019" im Vergleich zu TBP

| Extraktionsreagens | $H_2SO_4$-Konz. (g/l) | As-extr. (g/l) | Anmerkungen |
|---|---|---|---|
| Versatic 1019-Hydroxamsäure (30% in Escaid 100) | 180-230 | 15 | extrahiert zusätzlich Sb, Bi und Fe vollständig |
| TBP (30 % in Escaid 100) | 490 | 4,6 | extrahiert keine anderen Elemente, benötigt $H_2SO_4$-Konz. > 400 g/l |
| TBP (100 %ig) | 490 | 15 | " " |

Wie ein Vergleich der erhaltenen Werte ergibt, ist - wie oben im Detail beschrieben - mit dem Extraktanden gemäß dem Stand der Technik eine Extraktion anderer Störelemente als Arsen nicht möglich. Zudem benötigt dieser eine deutlich höhere Schwefelsäure-Konzentration in der Elektrolytlösung. Diese muß daher vor einer Entfernung der Störelemente unter hohem Energieaufwand aufkonzentriert werden. Bei derart hohen Schwefelsäurekonzentrationen (nahe 500 g/l) ist eine Stabilität des Extraktanden TBP nicht mehr gewährleistet.

Beispiel 8 und Vergleichsbeispiel 2

An einer wäßrigen Schwefelsäurelösung mit 200 g $H_2SO_4$/l wurde mit Hydroxamsäure aus "Versatic® 1019" (Beispiel 8) bzw. mit Tributylphosphat (TBP; Vergleichsbeispiel 2) als Extraktand die Extraktion freier Schwefelsäure getestet. Das O/A-Verhältnis betrug 1 : 1; die Kontaktierungszeit lag bei 15 min.

Die Ergebnisse sind der nachfolgenden Tabelle 6 zu entnehmen.

Tabelle 6

| Extraktion freier $H_2SO_4$ durch Hydroxamsäure aus "Versatic® 1019" und durch TBP | | |
|---|---|---|
| Extraktionsreagens | extr. $H_2SO_4$ bei 25 °C | extr. $H_2SO_4$ bei 60 °C |
| Versatic 1019-Hydroxamsäure (30 % in Escaid® 100) | 0,26 g/l | 0,17 g/l |
| Versatic 1019-Hydroxamsäure (15 % in Escaid® 100) | 0,14 g/l | 0,08 g/l |
| TBP | 11,0 g/l | --- |

Ergebnis:

Wie ein Vergleich der extrahierten Schwefelsäuremenge in Tabelle 6 ergibt, trägt der Extraktand gemäß dem Stand der Technik, der üblicherweise in konzentrierter Form (100 %ig) für die Extraktion eingesetzt wird, erhebliche Mengen an freier Schwefelsäure aus der wäßrigen Phase aus. Die Werte liegen um nahezu

den Faktor $10^2$ höher als bei Extraktion mit Hydroxamsäuren entsprechend der vorliegenden Erfindung.

Beispiel 9

In entsprechend den Beispielen 1 bis 8 erhaltenen Organophasen, die die Störelemente Arsen, Antimon, Bismut und Eisen neben dem Extraktanden enthielten, wurden die Störelemente unter Anwendung der direkten Sulfidfällung aus der organischen Phase ausgefällt. Die Fällungsversuche wurden in einem beheizten Autoklaven aus V4-A-Stahl unter kräftigem Rühren während der Einleitung des Schwefelwasserstoffgases durchgeführt.

Die Ergebnisse sind der nachfolgenden Tabelle 7 zu entnehmen.

### T a b e l l e 7

Direkte $H_2S$-Fällung der beladenen organischen Hydroxamsäurephase.
(Die Ausgangsgehalte der jeweils verwendeten beladenen Organophase waren geringfügig unterschiedlich).
* Versuch unter voller Ausnutzung des gesamten Autoklavenvolumens (kein Leerraum)

| Temp. °C | Anfangsdruck $H_2S$ (bar) | Enddruck $H_2S$ (bar) | Fällungs-dauer (min) | gefällte Menge (g/l) Sb | As | Bi | gefällte Menge (%) Sb | As | Bi |
|---|---|---|---|---|---|---|---|---|---|
| RT | 10 | 4,4 | 60 | 0,2 | 3,2 | 0,03 | 75 | 38 | 100 |
| 60 | 1 | 1 | 60 | 0,3 | 4,0 | 0,03 | 100 | 49 | 100 |
| 70 | 10 | 7,1 | 60 | 0,3 | 8,2 | 0,03 | 100 | 100 | 100 |
| 80 | 1 | 1 | 60 | 0,3 | 5,3 | 0,03 | 100 | 65 | 100 |
| 80 | 10 | 3,2 | 20 | 0,3 | 7,1 | 0,03 | 100 | 92 | 100 |
| 80 | 10 | 5,2 | 25 | 0,3 | 7,0 | 0,03 | 100 | 97 | 100 |
| 80 | 10 | 7,0 | 15 | 0,3 | 6,9 | 0,03 | 100 | 97 | 100 |
| 80 | 10 | 10 | 25 | 0,3 | 6,9 | 0,03 | 100 | 97 | 100 |
| 80* | 2 | 2 | 15 | 0,3 | 5,0 | 0,03 | 100 | 80 | 100 |
| 80 | berechnete Menge $H_2S$ (ca. 1 bar) | 3 bar, mit $N_2$ erhöht | 15 | 0,2 | 4,1 | 0,03 | 100 | 70 | 100 |

Ergebnis:

Die aus den wäßrigen Elektrolytlösungen extrahierten Bismut-Mengen (0,03 bis 0,04 g/l) wurden vollständig gefällt.

Fe wird in allen Fällen bei dieser Verfahrensweise nicht gefällt. In Abhängigkeit von den angewandten Fällungsbedingungen ($H_2S$-Druck, Fällungsdauer) konnten die Störelemente in den meisten Fällen zu sehr hohen Anteilen, unter Umständen sogar zu 100 %, aus der organischen Phase direkt gefällt werden.

Beispiel 10 und Vergleichsbeispiel 3

In unterschiedlicher Weise mit Arsen, Antimon, Bismut und Eisen beladene Organophasen, die Hydroxamsäuren aus "Versatic® 1019" als Extraktanden enthielten, wurden gleichzeitig mit $H_2S$ und einer wäßrigen Lösung eines Eisen-Komplexbildners behandelt, um nebeneinander Arsen, Antimon und Bismut zu fällen und gleichzeitig Eisen als wasserlöslichen Komplexbildner zu binden. Die Zeiten des Kontakts der Organophase mit $H_2S$ und der wäßrigen Lösung, die den Komplexbildner für Eisen enthielt, lagen bei 15 bis 120 min.

Die Ergebnisse sind der nachfolgenden Tabelle 8 zu entnehmen.

Bei Verwendung einer wäßrigen Schwefelsäurephase (Konzentration an $H_2SO_4$: 150 g/l) (Vergleichsbeispiel 3) wird zwar (durch Sättigung mit $H_2S$) eine nahezu vollständige Fällung von Arsen, Antimon und Bismut erreicht; Fe ist jedoch bei diesen Bedingungen nicht in die wäßrige Phase reextrahierbar. Dies zeigt sich aus der nachfolgenden Tabelle 8, letzte Zeile.

### Tabelle 8

Kombinierte direkte Sulfidfällung und Behandlung mit wasserlöslichen Komplexbildnern oder Mineralsäuren

| Wasserlöslicher Komplexbildner/ Mineralsäure | O/A-Verh. | $H_2S$-Druck (bar) | Temp. (°C) | Dauer | % Fällung Sb | Bi | As | % Fe-reextrahiert |
|---|---|---|---|---|---|---|---|---|
| 3 m HCl | 1 : 1 | 10 | 90 | 120 | 100 | 100 | 100 | 100 |
| 3 m HCl | 1 : 1 | 2 | 80 | 30 | 100 | 100 | 97 | 100 |
| 3 m HCl | 2 : 1 | 10 | 60 | 60 | 100 | 100 | 98 | 100 |
| 3 m HCl | 2 : 1 | 5 | 60 | 15 | 100 | 100 | 56 | 100 |
| 3 m HCl | 4 : 1 | 10 | 60 | 60 | 100 | 100 | 88 | 100 |
| 1 m Oxalsäure | 1 : 1 | 10 | 60 | 60 | 100 | 100 | 94 | 100 |
| 0,5 m Oxalsäure | 1 : 1 | 5 | 90 | 60 | 100 | 100 | 96 | 75 |
| 0,5 m HEDP | 1 : 1 | 10 | 60 | 60 | 100 | 100 | 90 | 100 |
| $H_2SO_4$ (150 g/l) | 1 : 1 | 10 | 60 | 60 | 100 | 100 | 99 | 0 |

Beispiel 11

Im folgenden sind die Ergebnisse bei der Fe-Reextraktion mit wasserlöslichen Komplexierungsmitteln oder HCl beschrieben.

Wasserlösliche Komplexbildner

Versuch a

Nach Durchlaufen der direkten Sulfidfällung wurde die mit 0,41 g Fe/l beladene organische Phase (Versatic®1019-Hydroxamsäure) im Verhältnis O/A 3 : 1 mit dem entsprechenden Komplexbildner versetzt und 15 min bei RT geschüttelt. Nach 3-stufiger diskontinuierlicher Verfahrensweise waren die Ergebnisse:
0,5 molare Oxalsäure 80 % Fe-Reextraktion
0,5 molare HEDP 95 % Fe-Reextraktion

Versuch b

Eine mit 0,3 g/l Fe, 0,2 g/l Sb, 0,03 g/l Bi und 5,6 g/l As beladene organische Phase (Versatic®1019-Hydroxamsäure), die noch nicht der direkten Sulfidfällung zugeführt war, wurde mit Oxalsäure unterschiedlicher Konzentration versetzt (Testbedingungen O/A 1 : 1, Schüttelzeit 5 min bei RT, einstufig).

| | | | | |
|---|---|---|---|---|
| 0,1 molare Oxalsäure | Fe 0,3 g/l | Sb 0,2 g/l | As 5,6 g/l |
| 0,5 " " | Fe 0,1 g/l | Sb 0,1 g/l | As 5,6 g/l |
| 1,0 " " | Fe<0,1 g/l | Sb 0,2 g/l | As 5,6 g/l |

Versuch c

Verwendete Organophasen wie bei Versuch b, jedoch wurde hier die Zeitabhängigkeit der Reextraktion ermittelt:

| Schüttelzeit (min) | Fe-Gehalt in wäßriger Phase (0,5 m. Oxalsäure) |
|---|---|
| 1 | 0,07 g/l |
| 3 | 0,19 g/l |
| 5 | 0,22 g/l |
| 15 | 0,30 g/l |

Versuch d

Es wurde nach beendeter Sulfid-Fällung eine Organophase, welche noch Fe enthielt, mit HCl unterschiedlicher Molarität kontaktiert. Testbedingungen O/A 1 : 1, 15 min Schüttelzeit, einstufig, Temp. wie angegeben.
3 m HCl (RT) 7 % Fe reextrahiert
6 m HCl (RT) 50 % Fe reextrahiert
3 m HCl (60 °C) 13 % Fe reextrahiert

**Patentansprüche**

1. Verfahren zur gemeinsamen Abtrennung von Arsen, Antimon, Bismut und Eisen nebeneinander aus Wertmetall-Elektrolytlösungen im Wege der Solvent-Extraktion und nachfolgende Wiedergewinnung der genannten Störelemente, dadurch gekennzeichnet, daß man
   (a) wäßrige, mineralsaure Wertmetall-Elektrolytlösungen mit einem wenig wasserlöslichen, eine oder mehrere Hydroxamsäuren der allgemeinen Formel (I)

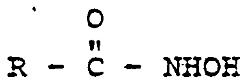

(I)

in der R für einen geradkettigen oder verzweigten, gesättigten oder ungesättigten Alkylrest mit 6 bis 22 C-Atomen, Cycloalkylrest oder Arylrest mit bis zu 19 C-Atomen steht, enthaltenden organischen Lösungsmittel versetzt,

(b) die wäßrige und organische Phase über eine ausreichende Kontaktierungszeit intensiv miteinander mischt,

(c) nach Phasentrennung die organische Phase abtrennt,

(d) diese mit einem Sulfidierungsmittel versetzt,

(e) die Sulfid-Fällungen des Arsens, Antimons und Bismuts auf an sich bekannten Wegen von der Organophase abtrennt,

(f) diese anschließend gegebenenfalls mit einem wasserlöslichen Komplexbildner für Eisen oder einer wäßrigen Lösung eines solchen Komplexbildners versetzt,

(g) den gebildeten Eisenkomplex mit Wasser reextrahiert und

(h) die verbleibende Organophase auf an sich bekannten Wegen aufarbeitet und/oder nachschärft und recyclisiert.

**2.** Verfahren nach Anspruch 1, dadurch gekennzeichnet, daß man die Elemente Arsen, Antimon, Bismut und Eisen aus wäßrigen, mineralsauren Kupfer-Elektrolytlösungen abtrennt.

**3.** Verfahren nach Anspruch 2, dadurch gekennzeichnet, daß man die Elemente Arsen, Antimon, Bismut und Eisen aus wäßrigen, schwefelsauren Kupfer-Raffinationselektrolyse-Lösungen abtrennt.

**4.** Verfahren nach Ansprüchen 1 bis 3, dadurch gekennzeichnet, daß man als organisches Lösungsmittel Kohlenwasserstoffe oder deren Mischungen, bevorzugt Kerosine oder deren Mischungen, verwendet.

**5.** Verfahren nach Ansprüchen 1 bis 4, dadurch gekennzeichnet, daß man Kerosine oder deren Mischungen verwendet, die eine oder mehrere Hydroxamsäuren der allgemeinen Formel (I), in der R die oben angegebenen Bedeutungen hat, enthalten.

**6.** Verfahren nach Ansprüchen 1 bis 5, dadurch gekennzeichnet, daß man Kerosine oder deren Mischungen verwendet, die eine oder mehrere Hydroxamsäuren der allgemeinen Formel (I) enthalten, in der R für verzweigte, gesättigte Alkylreste mit 6 bis 22 C-Atomen, bevorzugt mit 7 bis 19 C-Atomen, steht.

**7.** Verfahren nach Anspruch 6, dadurch gekennzeichnet, daß man Kerosine oder deren Mischungen verwendet, die eine oder mehrere Hydroxamsäuren der allgemeinen Formel (I) enthalten, in der R für neo-Alkylreste der allgemeinen Formel (II) steht,

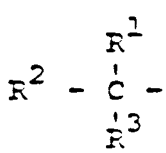

(II)

in der die Summe der Zahl der C-Atome der Reste $R^1$, $R^2$ und $R^3$ im Bereich von 6 bis 18 liegt.

**8.** Verfahren nach Ansprüchen 1 bis 7, dadurch gekennzeichnet, daß man Kerosine oder deren Mischung verwendet, die eine oder mehrere Hydroxamsäuren der allgemeinen Formel (I) in einer Konzentration von 0,1 bis 2,0 mol/l organische Phase, bevorzugt in einer Konzentration von 0,5 bis 1,0 mol/l organische Phase, enthalten.

**9.** Verfahren nach Ansprüchen 1 bis 8, dadurch gekennzeichnet, daß man die wäßrige und die organische, die Hydroxamsäure(n) enthaltende Phase über eine Zeit von 1 bis 60 min, bevorzugt über eine Zeit von 10 bis 20 min, intensiv miteinander mischt.

**10.** Verfahren nach Ansprüchen 1 bis 8, dadurch gekennzeichnet, daß man die wäßrige und die organische, die Hydroxamsäure(n) enthaltende Phase bei einer Temperatur von 20 bis 70 ° C, bevorzugt bei einer Temperatur von 30 bis 60 ° C, intensiv miteinander mischt.

**11.** Verfahren nach Ansprüchen 1 bis 8, dadurch gekennzeichnet, daß man die wäßrige und die organische, die Hydroxamsäure(n) enthaltende Phase in einem Mixer-Settler intensiv miteinander mischt.

**12.** Verfahren nach Anspruch 1, dadurch gekennzeichnet, daß man als Sulfidierungsmittel $H_2S$ oder wasserfreies $Na_2S$, bevorzugt $H_2S$, verwendet.

**13.** Verfahren nach Ansprüchen 1 und 12, dadurch gekennzeichnet, daß man $H_2S$ in stöchiometrischer oder geringfügig überstöchiometrischer Menge in das Reaktionssystem einleitet und dieses dann mit einem Inertgas beaufschlagt.

**14.** Verfahren nach Ansprüchen 1 und 12, dadurch gekennzeichnet, daß man die Sulfidierung bei einem $H_2S$-Druck von 1 bis 50 bar, bevorzugt bei einem Druck von 1 bis 3 bar, durchführt.

**15.** Verfahren nach Ansprüchen 1 und 12, dadurch gekennzeichnet, daß man die Sulfidierung bei einer Temperatur von 40 bis 90 ° C durchführt.

**16.** Verfahren nach Ansprüchen 1 und 12, dadurch gekennzeichnet, daß man die Sulfidierung über eine Reaktionszeit von 1 bis 60 min, bevorzugt von 5 bis 20 min, durchführt.

**17.** Verfahren nach Ansprüchen 1 und 12 bis 16, dadurch gekennzeichnet, daß man die ausgefällten Sulfide von der Organophase abfiltriert und den Filterkuchen mit einer Mineralsäure und danach gegebenenfalls mit einem organischen Lösungsmittel wäscht.

**18.** Verfahren nach Anspruch 1, dadurch gekennzeichnet, daß man als wasserlöslichen Komplexbildner für Eisen eine Verbindung aus der Gruppe HCl, Oxalsäure und Hydroxyethandiphosphonsäure verwendet.

**19.** Verfahren nach Ansprüchen 1 und 18, dadurch gekennzeichnet, daß man einen wasserlöslichen Komplexbildner für Eisen in einer Konzentration von 0,1 bis 2 mol/l bevorzugt in einer Konzentration von 0,5 bis 1 mol/l einsetzt.

**20.** Verfahren nach Ansprüchen 1 und 18, dadurch gekennzeichnet, daß man die Umsetzung mit einem wasserlöslichen Komplexbildner für Eisen über eine Zeit von 1 bis 20 min, bevorzugt über eine Zeit von 5 bis 15 min, durchführt.

**21.** Verfahren nach Ansprüchen 1 und 18, dadurch gekennzeichnet, daß man die Umsetzung mit einem wasserlöslichen Komplexbildner für Eisen in einem Mixer-Settler durchführt.

**22.** Verfahren nach Ansprüchen 1 und 18 bis 21, dadurch gekennzeichnet, daß man bei Verwendung von Chlorwasserstoff oder wäßriger Salzsäure als wasserlöslichem Komplexbildner für Eisen die eisenhaltige, organische Extraktionsphase nach der Chlorwasserstoff- oder Salzsäurezugabe mit einem flüssigen Ionenaustauscher in Form eines sekundären Amins versetzt und das so extrahierte Eisen anschließend mit Wasser reextrahiert.

**23.** Verfahren nach Ansprüchen 1 bis 22, dadurch gekennzeichnet, daß man zusätzlich zur Weiterverwertung der abgetrennten Störelemente diese aus den Sulfidniederschlägen bzw. Reextraktionslösungen über schmelzmetallurgische oder hydrometallurgische Verfahren zurückgewinnt.

**Claims**

**1.** A process for the collective removal of arsenic, antimony, bismuth and iron from valuable-metal electrolyte solutions by solvent extraction and subsequent recovery of the foreign elements mentioned, characterized in that

(a) a sparingly water-soluble organic solvent containing one or more hydroxamic acids corresponding to general formula (I)

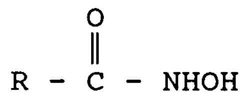 (I)

in which R is a linear or branched, saturated or unsaturated alkyl radical containing 6 to 22 carbon atoms, cycloalkyl radical or aryl radical containing up to 19 carbon atoms is added to aqueous valuable-metal electrolyte solutions in a mineral acid,
(b) the aqueous and organic phases are intensively mixed with one another for a sufficiently long contacting time,
(c) the organic phase is removed after phase separation,
(d) a sulfidizing agent is added to the organic phase,
(e) the sulfide precipitates of arsenic, antimony and bismuth are separated from the organic phase by methods known **per se,**
(f) a water-soluble complexing agent for iron or an aqueous solution of such a complexing agent is then optionally added,
(g) the iron complex formed is re-extracted with water and
(h) the remaining organic phase is worked up by methods known **per se** and/or restrengthened and recycled.

**2.** A process as claimed in claim 1, characterized in that the elements arsenic, antimony, bismuth and iron are separated from aqueous copper electrolyte solutions in a mineral acid.

**3.** A process as claimed in claim 2, characterized in that the elements arsenic, antimony, bismuth and iron are separated from aqueous copper refining electrolysis solutions in sulfuric acid.

**4.** A process as claimed in claims 1 to 3, characterized in that hydrocarbons or mixtures thereof, preferably kerosines or mixtures thereof, are used as the organic solvent.

**5.** A process as claimed in claims 1 to 4, characterized in that kerosines or mixtures thereof containing one or more hydroxamic acids corresponding to general formula (I), in which R is as defined above, are used.

**6.** A process as claimed in claims 1 to 5, characterized in that kerosines or mixtures thereof containing one or more hydroxamic acids corresponding to general formula (I), in which R represents branched, saturated $C_{6-22}$ and preferably $C_{7-19}$ alkyl radicals, are used.

**7.** A process as calimed in claim 6, characterized in that kerosines or mixtures thereof containing one or more hydroxamic acids corresponding to general formula (I), in which R represents neo-alkyl radicals corresponding to general formula (II)

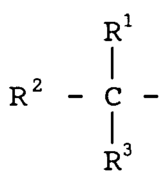 (II)

in which the sum total of carbon atoms in the substituents $R^1$, $R^2$ and $R^3$ is from 6 to 18, are used.

**8.** A process as claimed in claims 1 to 7, characterized in that kerosines or mixtures thereof containing one or more hydroxamic acids corresponding to general formula (I) in a concentration of 0.1 to 2.0 mol/l organic phase and preferably in a concentration of 0.5 to 1.0 mol/l organic phase are used.

**9.** A process as claimed in claims 1 to 8, characterized in that the aqueous phase and the organic phase containing the hydroxamic acid(s) are intensively mixed with one another for 1 to 60 minutes and preferably for 10 to 20 minutes.

**10.** A process as claimed in claims 1 to 8, characterized in that the aqueous phase and the organic phase containing the hydroxamic acid(s) are intensively mixed together at a temperature of 20 to 70 ° C and preferably at a temperature of 30 to 60 ° C.

**11.** A process as claimed in claim 1 to 8, characterized in that the aqueous phase and the organic phase containing the hydramic acid(s) are intensively mixed together in a mixer settler unit.

**12.** A process as claimed in claim 1, characterized in that $H_2S$ or anhydrous $Na_2S$, preferably $H_2S$, is used as the sulfidizing agent.

**13.** A process as claimed in claims 1 and 12, characterized in that $H_2S$ is introduced into the reaction system in a stoichiometric or slightly overstoichiometric quantity and the reaction system is subsequently filled with an inert gas.

**14.** A process as claimed in claims 1 and 12, characterized in that the sulfidizing reaction is carried out under an $H_2S$ pressure of 1 to 50 bar and preferably under an $H_2S$ pressure of 1 to 3 bar.

**15.** A process as claimed in claims 1 and 12, characterized in that the sulfidizing reaction is carried out at a temperature of 40 to 90 ° C.

**16.** A process as claimed in claims 1 and 12, characterized in that the sulfidizing reaction is carried out over a period of 1 to 60 minutes and preferably over a period of 5 to 20 minutes.

**17.** A process as claimed in claims 1 and 12 to 16, characterized in that the sulfides precipitated are filtered off from the organic phase and the filter cake is washed with a mineral acid and then optionally with an organic solvent.

**18.** A process as claimed in claim 1, characterized in that a compound from the group consisting of HCl, oxalic acid and hydroxyethane diphosphonic acid is used as the water-soluble complexing agent for iron.

**19.** A process as claimed in claims 1 and 18, characterized in that a water-soluble complexing agent for iron is used in a concentration of 0.1 to 2 mol/l and preferably in a concentration of 0.5 to 1 mol/1.

**20.** A process as claimed in claims 1 and 18, characterized in that the reaction with a water-soluble complexing agent for iron is carried out over a period of 1 to 20 minutes and preferably over a period of 5 to 15 minutes.

**21.** A process as claimed in claims 1 and 18, characterized in that the reaction with a water-soluble complexing agent for iron is carried out in a mixer settler unit.

**22.** A process as claimed in claims 1 and 18 to 21, characterized in that, where hydrogen chloride or aqueous hydrochloric acid is used as the water-soluble complexing agent for iron, a liquid ion exchanger in the form of a secondary amine is added to the iron-containing organic extraction phase after the addition of hydrogen chloride or hydrochloric acid and the iron thus extracted is subsequently re-extracted with water.

**23.** A process as claimed in claims 1 to 22, characterized in that, in addition to their subsequent utilization, the foreign elements removed are recovered from the sulfide deposits or re-extraction solutions by pyrometallurgical or hydrometallurgical processes.

**Revendications**

**1.** Procédé de séparation commune d'arsenic, d'antimoine, de bismuth et de fer conjointement à partir d'électrolytes de métaux nobles par extraction par solvant et récupération consécutive des éléments perturbateurs cités caractérisé en ce que;

(a) des électrolytes aqueux de métaux nobles acidifiés à l'acide minéral sont mélangés avec un solvant organique peu hydrosoluble contenant un ou plusieurs acides hydroxamiques de formule

générale (I)

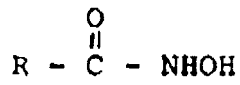 (I)

dans laquelle R désigne un radical alkyle saturé ou insaturé à chaîne droite ou ramifiée avec 6 à 22 atomes C, un radical cycloalkyle ou un radical aryle avec jusqu'à 19 atomes C,
(b) les phases aqueuse et organique sont mélangées intensivement l'une avec l'autre par un temps de mise en contact suffisant,
(c) la phase organise est séparée après séparation des phases,
(d) celle-ci est mélangée avec un agent de sulfuration,
(e) les précipitations de sulfures de l'arsenic, de l'antimoine et du bismuth sont séparées de la phase organique par des méthodes connues,
(f) celle-ci est ensuite mélangée éventuellement avec un complexant hydrosoluble pour le fer ou une solution aqueuse d'un tel complexant,
(g) le complexe de fer formé est réextrait avec de l'eau et
(h) la phase organique résiduelle est retraitée et/ou régénérée ou recyclée selon des méthodes connues.

**2.** Procédé, selon la revendication 1, caractérisé en ce que les éléments arsenic, antimoine, bismuth et fer sont séparés d'électrolytes de cuivre aqueux acidifiés par un acide minéral.

**3.** Procédé, selon le revendication 2, caractérisé en ce que les éléments arsenic, antimoine, bismuth et fer sont séparés de solutions aqueuses acidifiées à l'acide sulfurique d'électrolyse d'affinage du cuivre.

**4.** Procédé, selon les revendications 1 à 3, caractérisé en ce que des hydrocarbures ou leurs mélanges, de préférence des kérosènes ou leurs mélanges sont utilisés comme solvant organique.

**5.** Procédé, selon les revendications 1 à 4, caractérisé en ce que sont utilisés les kérosènes ou leurs mélanges qui contiennent un ou plusieurs acides hydroxamiques de formule générale (I) dans laquelle R a la signification spécifiée précédemment.

**6.** Procédé, selon les revendications 1 à 5, caractérisé en ce que sont utilisés les kérosènes ou leurs mélanges qui contiennent un ou plusieurs acides hydroxamiques de formule générale (I) dans laquelle R désigne des radicaux alkyle ramifiés saturés avec 6 à 22 atomes C, de préférence avec 7 à 19 atomes C.

**7.** Procédé solon la revendication 6 caractérisé en ce que sont utilisés les kérosènes ou leurs mélanges qui contiennent un ou plusieurs acides hydroxamiques de formule générale (I) dans laquelle R désigne des radicaux néoalkyle de formule générale (II)

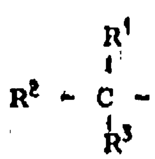 , (II)

dans laquelle la somme du'nombre des atomes C des radicaux $R^1$, $R^2$ et $R^3$ est de l'ordre de 6 à 18.

**8.** Procédé, selon les revendications 1 à 7, caractérisé en ce que sont utilisés des kérosènes ou leurs mélanges qui contiennent un ou plusieurs acides hydroxamiques de formule générale (I) dans une concentration de 0,1 à 2,0 mole/l de phase organique, de préférence dans une concentration de 0,5 à 1,0 mole/l de phase organique.

**9.** Procédé, selon les revendications 1 à 8, caractérisé en ce que la phase aqueuse et la phase organique

contenant le ou les acides hydroxamiques sont mélangées intensivement l'une avec l'autre pendant une période de 1 à 60 min, de préférence de 10 à 20 min.

**10.** Procédé, selon les revendications 1 à 8, caractérisé en ce que la phase aqueuse et la phase organique contenant le ou les acides hydroxamiques sont mélangées intensivement l'une avec l'autre à une température de 20 à 70 °C, de préférence de 30 à 60 °C.

**11.** Procédé, selon les revendications 1 à 8, caractérisé en ce que la phase aqueuse et la phase organique contenant le ou les acides hydroxamiques sont mélangées intensivement l'une avec l'autre dans un mélangeur-décanteur.

**12.** Procédé, selon la revendication 1, caractérisé on ce que de l'$H_2S$ ou du $Na_2S$ anhydre, de préférence de l'$H_2S$, est utilisé comme agent de sulfuration.

**13.** Procédé, selon les revendications 1 à 12, caractérisé en ce que de l'$H_2S$ est introduit en quantité stoechiométrique ou légèrement supérieure dans le système réactif et que celui-ci est ensuite alimenté avec un gaz inerte.

**14.** Procédé, selon les revendications 1 et 12, caractérisé en ce que la sulfuration est pratiquée a une pression d'$H_2S$ de 1 à 50 bar, de préférence à une pression de 1 à 3 bar.

**15.** Procédé, selon les revendications 1 et 12, caractérisé en ce que la sulfuration est pratiquée à une température de 40 à 90 °C.

**16.** Procédé, selon les revendications 1 et 12, caractérisé en ce que la sulfuration est pratiquée sur un temps de réaction de 1 à 60 min, de préférence de 5 à 20 min.

**17.** Procédé, selon les revendications 1 et 12 à 16, caractérisé en ce que les sulfures précipités de la phase organique sont séparés par filtration de la phase organique et le gâteau de filtre est lavé avec un acide minéral et ensuite éventuellement avec un solvant organique.

**18.** Procédé, selon la revendication 1, caractérisé en ce qu'un composé du groupe HCl, acide oxalique et acide hydroxyéthanediphosphonique est utilisé comme complexant hydrosoluble pour le fer.

**19.** Procédé, selon les revendications 1 et 18, caractérisé en ce qu'un complexant hydrosoluble pour le fer est utilisé dans une concentration de 0,1 à 2 moles/l, de préférence de 0,5 à 1 mole/l.

**20.** Procédé, salon les revendications 1 et 18, caractérisé en ce que la réaction avec un complexant hydrosoluble pour le fer se déroule sur un temps de 1 à 20 min, de préférence de 5 à 15 min.

**21.** Procédé, selon les revendications 1 et 18, caractérisé en ce que la réaction avec un complexant hydrosoluble pour le fer se déroule dans un mélangeur-décanteur.

**22.** Procédé, selon les revendications 1 et 18 à 21, caractérisé en ce que, en cas d'utilisation d'acide chlorhydrique ou d'acide sulfurique aqueux comme complexant hydrosoluble pour le fer, la phase d'extraction organique contenant du fer est mélangée avec un échangeur d'ions liquide sous forme d'une amine secondaire après addition de chlorure d'hydrogène ou d'acide chlorhydrique et le fer ainsi extrait est ensuite réextrait avec de l'eau.

**23.** Procédé, selon les revendications 1 à 22, caractérisé on ce que les éléments perturbateurs sont récupérés des dépôts de sulfure ou des solutions de réextraction par des procédés pyrométallurgiques ou hydrométallurgiques pour le recyclage des éléments perturbateurs séparés.

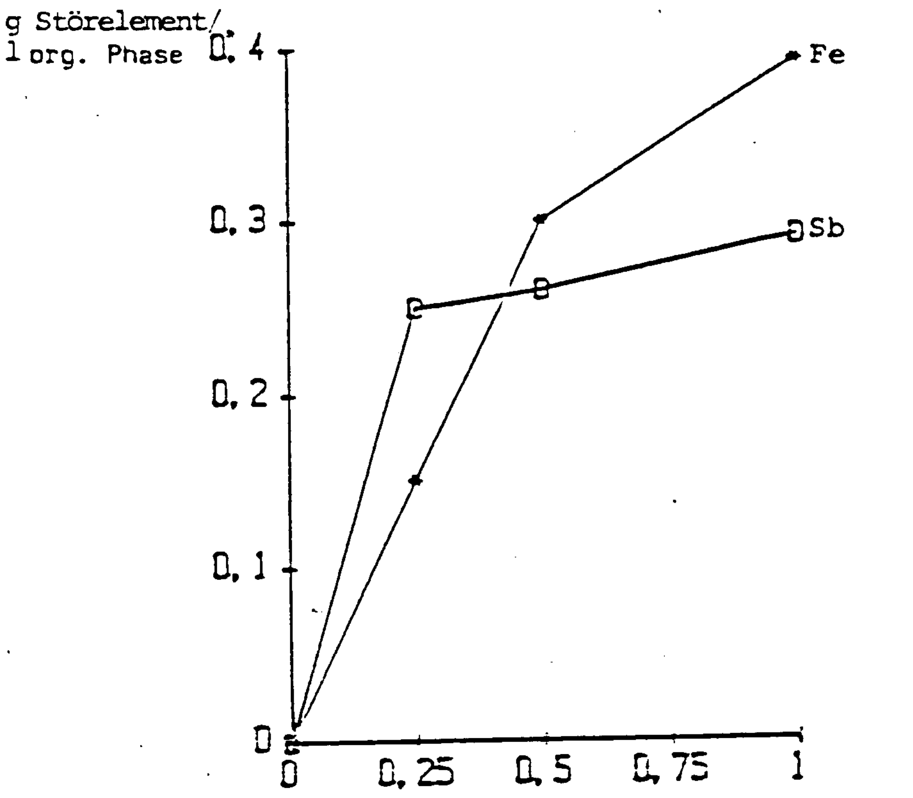
g Störelement/
1 org. Phase
0,4
0,3
0,2
0,1
0
Fe
Sb
0
0,25
0,5
0,75
1
Mol (I)/
1 org. Phase

Fig. 1

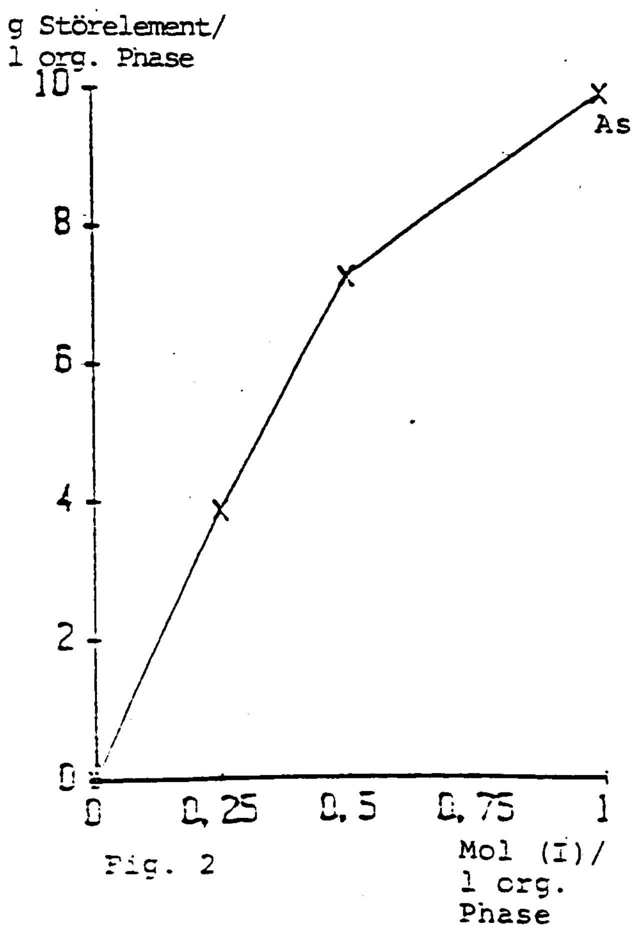
g Störelement/
1 org. Phase
10
8
6
4
2
0
As
0
0,25
0,5
0,75
1
Mol (I)/
1 org.
Phase

Fig. 2

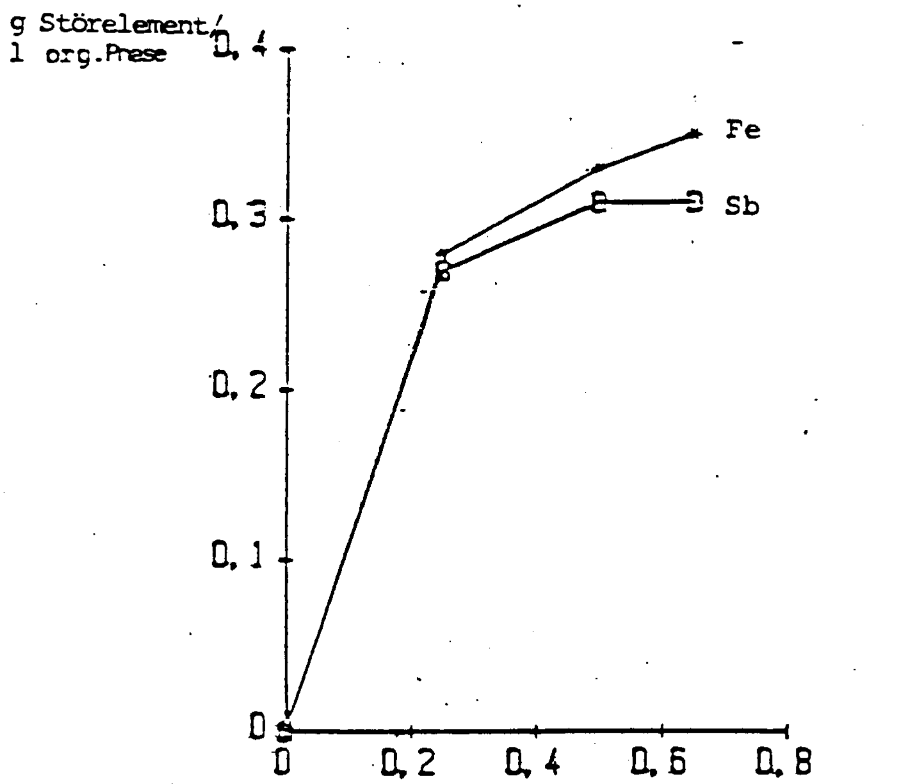
g Störelement/
l org.Prese
0,4
0,3
0,2
0,1
0
Fe
Sb
0
0,2
0,4
0,6
0,8
Mol (I)/
l org. Phase

Fig. 3

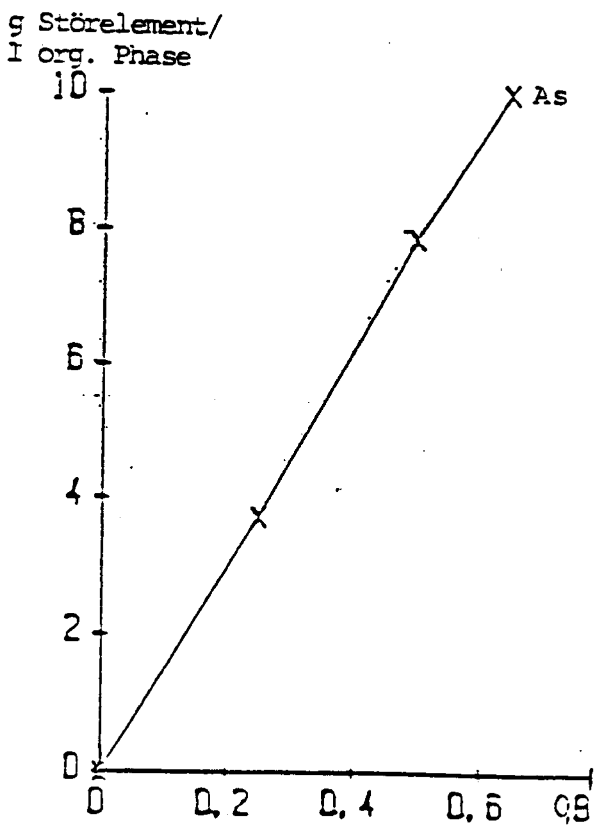
g Störelement/
I org. Phase
10
8
6
4
2
0
As
0
0,2
0,4
0,6
0,8
Mol (I)/
l org.
Phase

Fig. 4

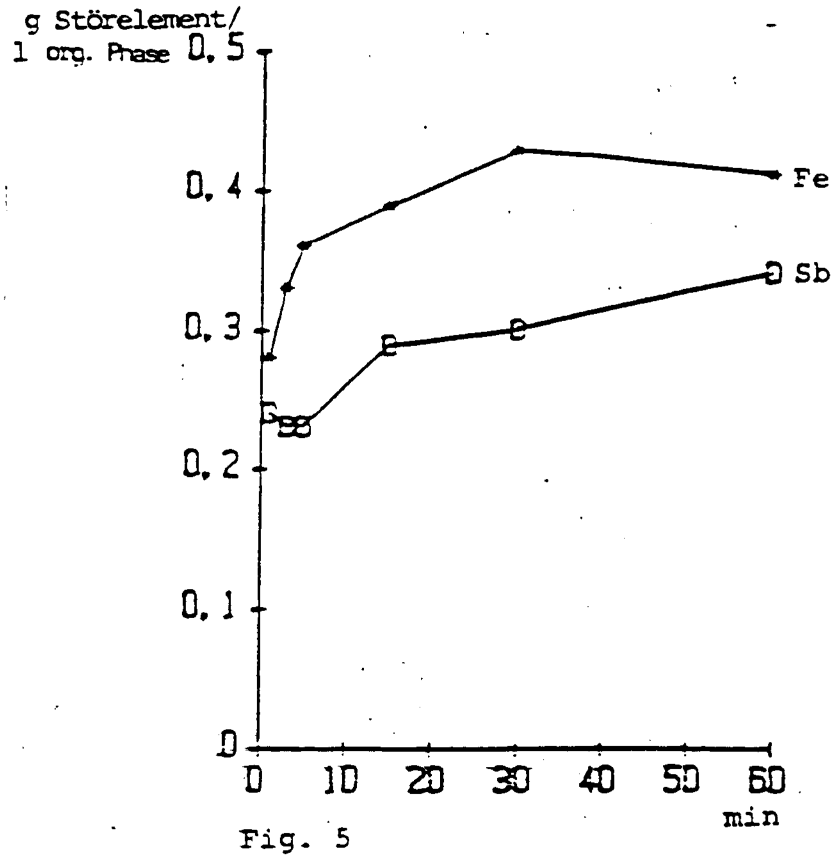
g Störelement/
1 org. Phase
0,5
0,4
0,3
0,2
0,1
0
Fe
Sb
0
10
20
30
40
50
60
min

Fig. 5

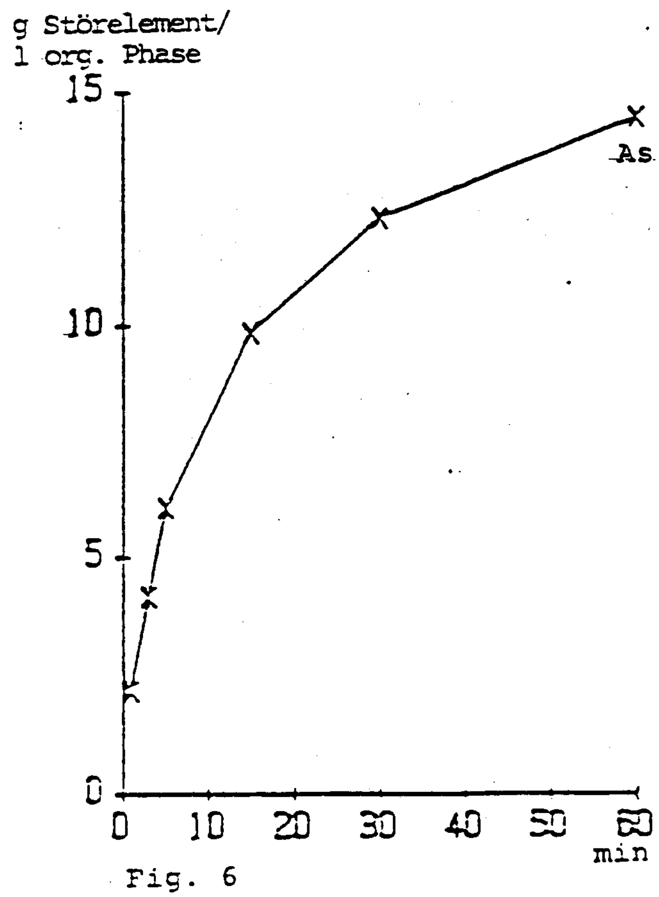
g Störelement/
1 org. Phase
15
10
5
0
As
0
10
20
30
40
50
60
min

Fig. 6

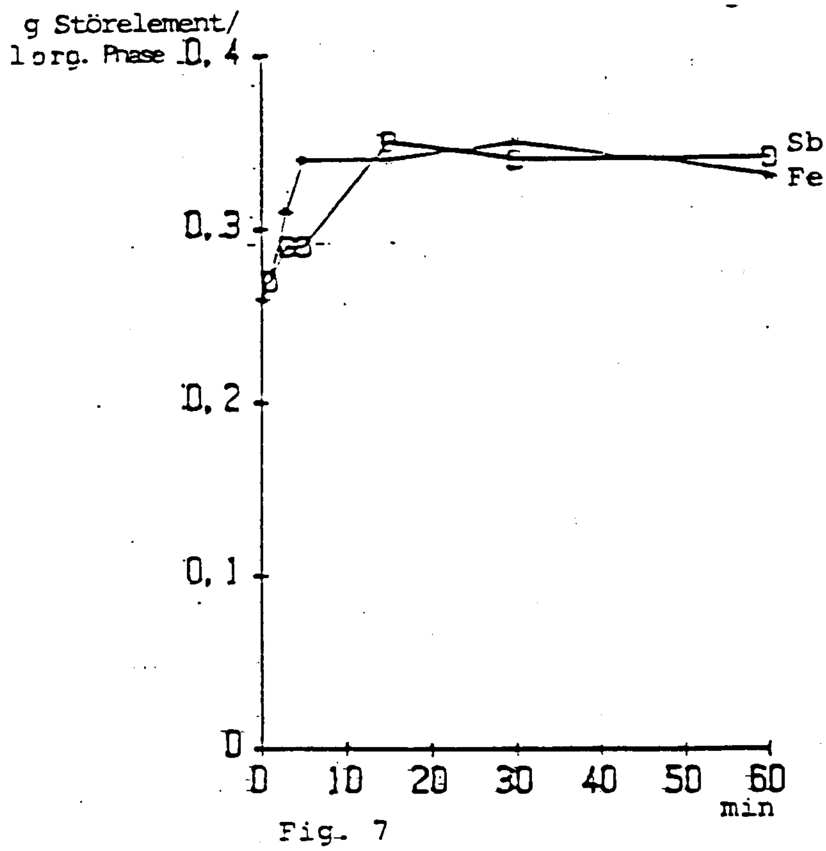
g Störelement/
l org. Phase
0,4
0,3
0,2
0,1
0
Sb
Fe
0
10
20
30
40
50
60
min

Fig. 7

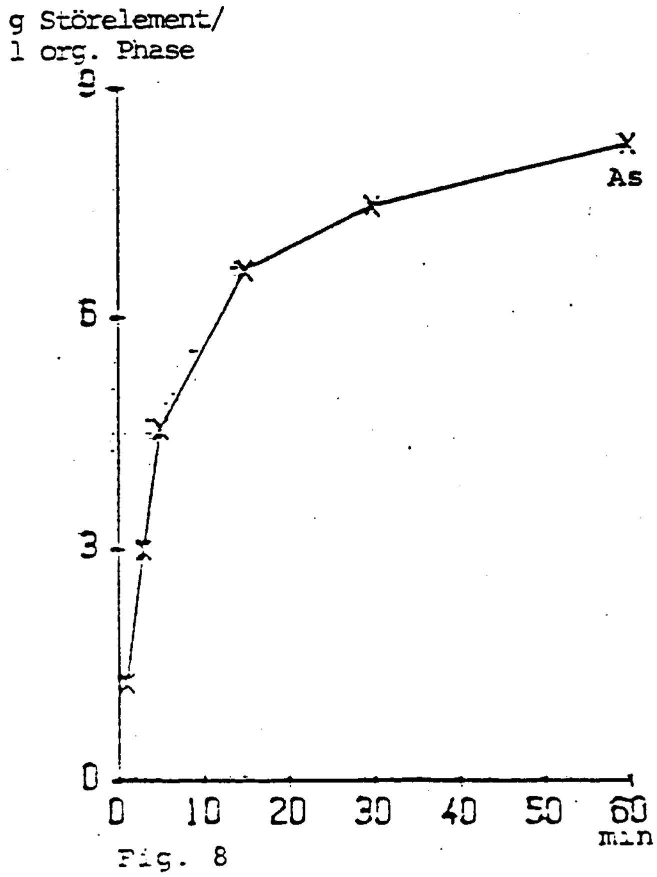
g Störelement/
l org. Phase
9
6
3
0
As
0
10
20
30
40
50
60
min

Fig. 8